(19) Europäisches Patentamt / European Patent Office / Office européen des brevets

(11) **EP 4 229 490 B1**

(12) **EUROPÄISCHE PATENTSCHRIFT**

(45) Veröffentlichungstag und Bekanntmachung des Hinweises auf die Patenterteilung:
**17.01.2024   Patentblatt 2024/03**

(21) Anmeldenummer: **22839839.2**

(22) Anmeldetag: **23.12.2022**

(51) Internationale Patentklassifikation (IPC):
**G05B 19/43** (2006.01)    **G05B 11/42** (2006.01)

(52) Gemeinsame Patentklassifikation (CPC):
G05B 11/42; **G05B 19/43;** G05B 2219/37604;
G05B 2219/41434; G05B 2219/42022;
G05B 2219/42282; G05B 2219/43199

(86) Internationale Anmeldenummer:
**PCT/EP2022/087800**

(87) Internationale Veröffentlichungsnummer:
**WO 2023/131562 (13.07.2023 Gazette 2023/28)**

(54) **VERFAHREN UND VORRICHTUNGEN ZUM REGELN EINER HOCH DYNAMISCHEN REGELSTRECKE MIT FLUIDISCHEM ANTRIEB MITHILFE EINES RATENBEGRENZERS**

METHODS AND DEVICES FOR CONTROLLING A HIGHLY DYNAMIC CONTROLLED SYSTEM WITH FLUIDIC DRIVE BY MEANS OF A RATE LIMITER

PROCÉDÉS ET DISPOSITIFS DE COMMANDE D'UN SYSTÈME COMMANDÉ HAUTEMENT DYNAMIQUE À ENTRAÎNEMENT FLUIDIQUE AU MOYEN D'UN LIMITEUR DE DÉBIT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.01.2022   DE 102022100223**

(43) Veröffentlichungstag der Anmeldung:
**23.08.2023   Patentblatt 2023/34**

(73) Patentinhaber: **Samson Aktiengesellschaft
60314 Frankfurt (DE)**

(72) Erfinder: **FIEBIGER, Andreas
65232 Taunusstein (DE)**

(74) Vertreter: **Köllner & Partner mbB
Vogelweidstraße 8
60596 Frankfurt am Main (DE)**

(56) Entgegenhaltungen:
DE-A1- 3 731 983      DE-A1-102020 002 868
US-A1- 2010 066 296

EP 4 229 490 B1

**Beschreibung**

Gebiet der Erfindung

Die Erfindung betrifft Verfahren und Vorrichtungen zum Regeln einer Regelstrecke mit einem fluidischen Antrieb. Regelstrecken mit fluidischem Antrieb sind bspw. in Stellventilen zum Verändern einer Prozessfluidströmung in prozesstechnischen Anlagen zu finden. Die Veränderung der Prozessfluidströmung wird dabei in vielen Fällen mithilfe eines Ventilglieds wie z.B. eines beweglichen Ventilkegels oder einer beweglichen Drosselklappe bewirkt.

Ventilglieder von Stellventilen zum Verändern einer Prozessfluidströmung in prozesstechnischen Anlagen werden bevorzugt mit fluidischen Antrieben bewegt. Fluidische Antriebe zeichnen sich dadurch aus, dass sie im Niederstrom- bzw. Niederspannungsbereich betrieben werden können, was insbesondere für Anwendungen in prozesstechnischen Anlagen wünschenswert und oftmals sogar unumgänglich ist.

Die Regelung eines fluidischen Antriebs erfolgt häufig über einen sog. Stellungsregler. Der Stellungsregler empfängt hierzu von einer Leitwarte einen Soll-Wert für eine Regelgröße (Führungsgröße) wie z.B. die Position eines Ventilglieds. Der Soll-Wert kann bspw. in Form eines Stromsignals im Bereich von 4 - 20 mA oder eines Spannungssignals im Bereich von 0 - 5 V, 0 - 12 V oder 0 - 24 V an den Stellungsregler übertragen werden.

Der Soll-Wert der Regelgröße kann anschließend mithilfe eines Strom-Druck-Wandlers (IP-Wandler) in ein fluidisches Signal umgewandelt werden. Da die elektrische Versorgungsleistung in der Prozesstechnik häufig stark begrenzt ist, wird das fluidische Signal häufig nochmals mittels eines nachgeschalteten Luftleistungsverstärkers (allgemein: Druck-Druck-Wandler, PP-Wandler) verstärkt. Das solcherart verstärkte fluidische Signal wird schließlich zum Betrieb des fluidischen Antriebs genutzt.

Der fluidische Antrieb kann mit einer Antriebsstange verbunden sein, und diese wiederum mit dem Ventilglied des Stellventils. Auf diese Weise kann der fluidische Antrieb mithilfe der Antriebsstange das Ventilglied bewegen.

Zum Regeln der Position des Ventilglieds kann das Stellventil ein Positionsmesssystem aufweisen. Das Positionsmesssystem erfasst die Position des Ventilglieds und meldet diese an den Stellungsregler zurück. Im Stellungsregler wird in Abhängigkeit von dem von der Leitwarte vorgegebenen Soll-Wert und dem von dem Positionsmesssystem gemeldeten Ist-Wert der Regelgröße ein Wert einer Stellgröße erzeugt. Der Wert der Stellgröße ist in diesem Fall das Stromsignal, das von dem Strom-Druck-Wandler in das fluidische Signal umgewandelt wird, welches mit dem Luftleistungsverstärker verstärkt und zum Betrieb des fluidischen Antriebs genutzt wird. Im Rahmen des von dem Stellungsregler ausgeführten Regelverfahrens reagiert der Wert der Stellgröße bzw. das Stromsignal fortlaufend auf den Ist-Wert der Regelgröße, d.h. auf die Position des Ventilglieds, die von dem Positionsmesssystem erfasst wird.

Neben der Position eines Ventilglieds können auch Drücke oder Durchflussmengen vorgegeben und geregelt werden, mit entsprechenden Druck- oder Durchflusssensoren zur Bestimmung der zugehörigen Ist-Werte.

Die Güte der Regelung durch den Stellungsregler kann anhand der Geschwindigkeit, mit der die Regelstrecke den vorgegebenen Soll-Wert erreicht, und/oder der Amplitude der zwischenzeitlich erreichten Regelabweichungen bewertet werden. Die Regelgüte ist in vielen Fällen stark von der Leistung des Antriebs und der Leistungsaufnahme der damit angetriebenen Komponenten abhängig. Der Antrieb sollte weder zu schwach noch zu stark sein. Jedoch ist eine Anpassung des Antriebs an die Leistungsaufnahme der Komponenten einer Regelstrecke oft nicht möglich oder praktikabel.

Die Wahl fällt deshalb oft auf einen Antrieb, der zu leistungsstark bzw. zu schnell ist. Schließlich lassen sich mit einem leistungsstarken Antrieb ggf. kurze Regelzeiten und damit auch eine hohe Regelgüte erzielen.

Regelstrecken mit zu leistungsstarken Antrieben neigen jedoch zu langlebigen Regelschwingungen und großen Regelabweichungen, d.h. zu langlebigen und amplitudenstarken Schwingungen um den Soll-Wert der Regelgröße. Derartige Über- bzw. Dauerschwinger haben nicht nur einen negativen Einfluss auf die Regelgüte eines Regelkreises. Sie stellen auch eine Gefahr bei dessen Betrieb dar und können sogar zu schweren Schäden führen.

Um ein derartiges über- bzw. dauerschwingendes Verhalten zu vermeiden, werden in vielen Regeleinheiten bzw. Stellungsreglern Ratenbegrenzer eingesetzt. Ratenbegrenzer begrenzen den Betrag der Rate, mit der der Wert der Stellgröße verändert wird, auf ein Maximum (d.h. ein Ratenbegrenzer stellt sicher, dass der Absolutbetrag des Zahlenwerts, mit dem die Rate in einer vorgegebenen Maßeinheit wie bspw. %/s oder m/s angegeben wird, kleiner als oder gleich einem vorgegebenen Maximum ist). Der Einsatz eines Ratenbegrenzers kann als Geschwindigkeitsbegrenzung für den zu schnellen Antrieb der Regelstrecke aufgefasst werden, die verhindert, dass der Antrieb bzw. die Regelstrecke über das Ziel hinausschießt.

Über- bzw. Dauerschwinger können jedoch auch durch Verzögerungen bzw. Hysterese der einzelnen Funktionseinheiten eines Systems entstehen, d.h. die Regelgüte eines Regelkreises hängt u.a. auch davon ab wie schnell die einzelnen Funktionseinheiten auf Änderungen ihrer Betriebsparameter reagieren. Dazu gehört nicht nur die Hysterese magnetischer Komponenten bspw. eines Strom-Druck-Wandlers oder Magnetventils, sondern auch Reibungseffekte bspw. der Dicht- und Führungsstellen einer Antriebsstange oder eines Ventilglieds, Verzögerungen durch zwischengeschaltete Verstärker wie z.B. einen Luftleistungsverstärker sowie die Massenträgheit der beweglichen Komponenten.

In diesen Fällen kann ein Ratenbegrenzer ein über- bzw. dauerschwingendes Verhalten oft nicht verhindern. Schließlich wird der Wert der Stellgröße auch beim Einsatz eines Ratenbegrenzers solange verändert, bis das System reagiert. Die Reaktion des Systems kann jedoch zu spät erfolgen, so dass der Antrieb bzw. die Regelstrecke in vielen Fällen wieder über das Ziel hinausschießt.

Stand der Technik

Im Stand der Technik finden sich weitere Verfahren und Vorrichtungen zur Verbesserung der Regelgüte eines Regelkreises, der Verzögerungen bzw. Hysterese aufweist. DE102020002868 beschreibt ein Steuerungsverfahren für ein teilelektronisches System, wie ein elektrohydraulisches System, mit mindestens einem elektroproportionalen Stellglied, das in Abhängigkeit seiner Stellgröße zur Beeinflussung mindestens einer physikalischen Regelgröße des eine Regelstrecke aufweisenden Systems dient, wobei aus korrelierenden Zustandswerten von Stell- und Regelgröße ein Kennfeld erstellt wird, welches für Steuerungsvorgänge im späteren Betrieb des Systems herangezogen wird. In der WO 2008/064740 A1 wird bspw. ein Verfahren zur Verbesserung der Regelgüte eines Regelkreises mit einem PID-Regler beschrieben. Dabei werden der I-Verstärkungsfaktor des PID-Reglers an eine Antriebsgeschwindigkeit und der D-Verstärkungsfaktor an einen Antriebsstrom und eine Antriebslast angepasst. Verzögerungs- und/oder Hysterese-Effekte werden jedoch nicht erkannt, so dass weiterhin Über- bzw. Dauerschwinger auftreten und zu gefährlichen Betriebssituationen führen können.

Die WO 2015/153105 A1 offenbart ein Diagnoseverfahren zur Bestimmung von Reibungseffekten, insbesondere von Stick-Slip Effekten. Das Verfahren sieht zudem Maßnahmen zur Beseitigung dieser Effekte vor, wie z.B. ein Einstellen einer Ventilpackung, Auftragen eines Packungsschmiermittels auf eine Ventilpackung, Auswechseln der Ventilpackung, Auswechseln der Ventilstange eines Steuerventils und/oder Einstellen des Steueralgorithmus in der Ventilsteuerung oder einer Prozesssteuerung. In vielen Fällen spielen Reibungs- oder Stick-Slip-Effekte jedoch eine untergeordnete Rolle. Zudem reagiert das Verfahren lediglich auf bereits erkannte Reibungs-/Stick-Slip-Effekte. Plötzlich oder unerwartet auftretende Verzögerungen oder Hysterese-Effekte werden nicht abgefangen.

Aufgabe

Aufgabe der Erfindung ist es, Vorrichtungen und Verfahren zur Verbesserung der Regelgüte von Regelkreisen mit fluidischen Antrieben bereitzustellen, in denen Verzögerungen und/oder Hysterese zu langlebigen Regelschwingungen und großen Regelabweichungen führen können, insbesondere wenn die Verzögerungen und/oder Hysterese plötzlich oder unerwartet auftreten.

Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Regeln einer Regelstrecke mit einem fluidischen Antrieb vorgeschlagen, wobei der fluidische Antrieb der Regelstrecke zum Steuern einer Regelgröße geeignet ist und die Regelstrecke zum Steuern der Regelgröße mit einer Stellgröße beaufschlagt wird. Das Verfahren umfasst folgende Schritte:

1. Vorgeben eines Soll-Werts für die Regelgröße;
2. Bestimmen eines Ist-Werts und einer Veränderungsrate des Ist-Werts der Regelgröße;
3. Bestimmen einer gewünschten Veränderung eines Werts der Stellgröße anhand des vorgegebenen Soll-Werts der Regelgröße und des bestimmten Ist-Werts der Regelgröße;
4. Leiten der gewünschten Veränderung des Werts der Stellgröße an einen Ratenbegrenzer;
5. Erzeugen eines neuen Werts der Stellgröße mithilfe des Ratenbegrenzers und der gewünschten Veränderung des Werts der Stellgröße,
5.1 wobei ein Soll-Wert für die Veränderungsrate des Ist-Werts der Regelgröße vorgegeben wird, der positiv ist;
5.2 wobei eine Grenzwertrate anhand der Abweichung der Veränderungsrate des Ist-Werts der Regelgröße von dem Soll-Wert derart bestimmt wird, dass der Grenzwertrate ein größerer Wert zugewiesen wird, wenn die Veränderungsrate des Ist-Werts der Regelgröße kleiner als der Soll-Wert ist, und ein kleinerer Wert, wenn die Veränderungsrate des Ist-Werts der Regelgröße größer als der Soll-Wert ist, und

5.3 wobei der Ratenbegrenzer, falls die gewünschte Veränderung des Werts der Stellgröße einer gewünschten Stellgrößenveränderungsrate entspricht, die größer als die Grenzwertrate ist, den neuen Wert der Stellgröße mit einer Stellgrößenveränderungsrate erzeugt, die gleich der Grenzwertrate ist.

Solange sich also der Ist-Wert der Regelgröße der Regelstrecke z.B. aufgrund von Verzögerungen der einzelnen Funktionseinheiten der Regelstrecke oder Hysterese nicht oder nur in einem unerheblichen Maße ändert, kann mit dem vorgeschlagenen Verfahren die Veränderung des Werts der Stellgröße weniger stark begrenzt werden als in Situationen, in denen sich der Ist-Wert der Regelgröße in der Weise ändert, die durch den Soll-Wert für die Veränderungsrate des Ist-Werts der Regelgröße vorgegeben ist. Somit können einerseits Zustände, in denen die Regelstrecke aufgrund von Verzögerungen und Hysterese verharrt, schneller überwunden bzw. durchfahren und damit einhergehende Totzeiten reduziert werden. Andererseits können bspw. in den Fällen, in denen die Veränderungsrate des Ist-Werts der Regelgröße über dem Soll-Wert liegt, zu starke Veränderungen der Stellgröße und damit einhergehende Über- bzw. Dauerschwingungen der Regelgröße vermieden werden.

Im Rahmen des Verfahrens können Verzögerungen bzw. Hysterese anhand der zeitlichen Veränderung des Ist-Werts der Regelgröße erkannt werden, insbesondere anhand der Abweichung der zeitlichen Veränderung von einem vorgegebenen Soll-Wert. Dabei kann die Begrenzung der Veränderungsraten des Werts der Stellgröße durch die Grenzwertrate instantan an die mithilfe der Veränderungsrate des Ist-Werts der Regelgröße erkannten Verzögerungen bzw. Hysterese-Effekte angepasst werden. Auf diese Weise können auch plötzlich oder unerwartet auftretende Verzögerungen oder Hysterese-Effekte abgefangen werden.

Falls die gewünschte Veränderung des Werts der Stellgröße einer Erhöhung des Werts der Stellgröße entspricht und die zugehörige gewünschte Stellgrößenveränderungsrate kleiner als die oder gleich der Grenzwertrate ist, erzeugt der Ratenbegrenzer den neuen Wert der Stellgröße in bevorzugten Ausführungsformen mit der gewünschten Stellgrößenveränderungsrate. Falls die gewünschte Veränderung des Werts der Stellgröße einer Erniedrigung des Werts der Stellgröße entspricht und die zugehörige gewünschte Stellgrößenveränderungsrate größer als die oder gleich der Grenzwertrate multipliziert mit dem Faktor (-1) ist, kann der Ratenbegrenzer den neuen Wert der Stellgröße bspw. ebenfalls gemäß der gewünschten Stellgrößenveränderungsrate erzeugen. Falls die gewünschte Veränderung des Werts der Stellgröße einer Erniedrigung des Werts der Stellgröße entspricht und die zugehörige gewünschte Stellgrößenveränderungsrate kleiner als die Grenzwertrate multipliziert mit dem Faktor (-1) ist, kann der Ratenbegrenzer den neuen Wert der Stellgröße bspw. mit einer Stellgrößenveränderungsrate erzeugen, die gleich der Grenzwertrate multipliziert mit dem Faktor (-1) ist.

Der Ist-Wert der Regelgröße kann direkt gemessen werden. Er kann auch aufgrund von Messungen einer oder mehrerer anderer Messgrößen und der dabei gewonnenen Messwerte berechnet werden.

Die gewünschte Veränderung kann durch einen gewünschten Wert für die Stellgröße angegeben werden oder durch einen Wert, um den der Wert der Stellgröße verändert werden soll, oder eine Rate, mit der der Wert der Stellgröße verändert werden soll.

Das Verfahren kann mithilfe von Software- und/oder Hardware-Komponenten implementiert werden. Zum Beispiel kann der Ratenbegrenzer, der im Rahmen des Verfahrens eingesetzt wird, eine Funktion eines Programms darstellen oder eine separate Hardwarekomponente eines Reglers bzw. Stellungsreglers.

Die gewünschte Veränderung des Werts der Stellgröße anhand des vorgegebenen Soll-Werts der Regelgröße und des bestimmten Ist-Werts der Regelgröße kann mithilfe eines P-, I-, PI-, PD- oder PID-Glieds bestimmt werden. Die Wahl des Glieds zur Bestimmung der gewünschten Veränderung des Werts der Stellgröße kann ebenfalls zur Verbesserung der Regelgüte eines Regelkreises genutzt werden.

Die gewünschte Veränderung des Werts der Stellgröße kann bspw. auch mithilfe einer Vorsteuerung bestimmt werden, die anhand einer bekannten oder im Vorfeld bestimmten Kennlinie dem vorgegebenen Soll-Wert einen ersten Schätzwert für die Stellgröße zuweist.

Die gewünschte Veränderung des Werts der Stellgröße kann Null sein. Die gewünschte Veränderung stellt jedoch in vielen Fällen einen neuen Wert für die Stellgröße dar oder eine Veränderung des Werts der Stellgröße.

Der Grenzwertrate wird in vielen Fällen ein positiver Wert zugewiesen. Es kann jedoch vorteilhaft sein, der Grenzwertrate einen negativen Wert zuzuweisen, bspw. wenn sich die Regelstrecke zwar bereits in die gewünschte Richtung bewegt, aber bereits im Begriff ist, über das Ziel hinauszuschießen, oder bereits über das Ziel hinausschießt. Das kann bspw. der Fall sein, wenn die Veränderungsrate des Ist-Werts der Regelgröße größer als der vorgegebene Soll-Wert ist. Um ein Überschwingen bzw. Überschießen zu vermeiden, kann ein positiver Schwellwert vorgegeben werden und der Grenzwertrate ein negativer Wert zugewiesen werden, wenn die Veränderungsrate des Ist-Werts der Regelgröße größer als der Soll-Wert zuzüglich des positiven Schwellwerts ist.

Das Vorgeben des positiven Schwellwerts kann bspw. direkt oder durch Vorgeben einer Kennlinie erfolgen, mit der der Grenzwertrate für jede mögliche Abweichung der Veränderungsrate des Ist-Werts der Regelgröße von dem Soll-Wert genau ein Wert zugewiesen werden kann. Die Kennlinie kann hierzu bspw. monoton steigend sein und einen Nulldurchgang beim Negativen des vorgegebenen positiven Schwellwerts aufweisen.

Um die Stabilität des vorgeschlagenen Regelverfahrens zu erhöhen, kann zudem ein positiver Mindestwert vorgegeben werden und der Ratenbegrenzer so eingerichtet werden, dass der Grenzwertrate nur dann ein neuer Wert zugewiesen wird, falls die Abweichung der Veränderungsrate des Ist-Werts der Regelgröße von dem Soll-Wert betragsmäßig größer ist als der positive Mindestwert.

Die Grenzwertrate wird anhand der Abweichung der Veränderungsrate des Ist-Werts der Regelgröße von dem Soll-Wert bestimmt. Dies kann bspw. mithilfe verschiedener Regler erfolgen, einschließlich P-, I-, PI-, PD- oder PID-Glieder. PD-Glieder zeichnen sich dabei z.B. aufgrund ihres schnellen Antwortverhaltens aus.

Zudem kann eine untere und eine obere Schranke für die Grenzwertrate vorgegeben werden, d.h. die Grenzwertrate wird so bestimmt, dass ihr Wert größer als die oder gleich der unteren Schranke und kleiner als die oder gleich der oberen Schranke ist. Durch das Beschränken der Grenzwertrate mit der unteren bzw. oberen Schranke kann sichergestellt werden, dass die Begrenzung der Veränderung des Werts der Stellgröße durch den Ratenbegrenzer ein Mindestmaß erfüllt. Ausreißer bzw. ein übermäßiges Überschießen der Regelstrecke, bspw. durch ein ungünstiges Rauschereignis oder -verhalten des Ist-Werts der Regelgröße, können so vermieden werden.

Der Ist-Wert der Regelgröße weist in vielen Fällen Fluktuationen bzw. Rauschen auf. Bei der Berechnung der Veränderungsrate des Ist-Werts der Regelgröße bspw. mithilfe von Differenzenquotienten können diese Fluktuationen bzw. kann das Rauschen noch verstärkt werden. Um dies zu vermeiden, kann ein zeitlicher Mittelwert des Ist-Werts der Regelgröße bestimmt werden und die Veränderungsrate des Ist-Werts der Regelgröße mithilfe des zeitlichen Mittelwerts des Ist-Werts der Regelgröße bestimmt werden. Um Fluktuationen bzw. Rauschen zu reduzieren, kann auch ein DT1-Glied zur Berechnung der Veränderungsrate des Ist-Werts der Regelgröße verwendet werden.

Um das vorgeschlagene Verfahren flexibler zu gestalten, kann anstatt der Grenzwertrate multipliziert mit dem Faktor (-1) auch eine weitere Grenzwertrate gebildet werden, analog zur Bildung der Grenzwertrate, d.h. zur Bildung der weiteren Grenzwertrate wird

- ein weiterer Soll-Wert für die Veränderungsrate des Ist-Werts der Regelgröße vorgegeben, der negativ ist;
- die weitere Grenzwertrate anhand der Abweichung der Veränderungsrate des Ist-Werts der Regelgröße von dem weiteren Soll-Wert derart bestimmt, dass der weiteren Grenzwertrate ein größerer Wert zugewiesen wird, wenn die Veränderungsrate des Ist-Werts der Regelgröße kleiner als der weitere Soll-Wert ist, und ein kleinerer Wert, wenn die Veränderungsrate des Ist-Werts der Regelgröße größer als der weitere Soll-Wert ist.

Der Ratenbegrenzer kann nun so eingerichtet werden, dass er, falls die gewünschte Veränderung des Werts der Stellgröße einer gewünschten Stellgrößenveränderungsrate entspricht, die kleiner als die weitere Grenzwertrate ist, den neuen Wert der Stellgröße mit einer Stellgrößenveränderungsrate erzeugt, die gleich der weiteren Grenzwertrate ist. Falls die gewünschte Veränderung des Werts der Stellgröße einer Erniedrigung des Werts der Stellgröße entspricht und die zugehörige gewünschte Stellgrößenveränderungsrate größer als die weitere oder gleich der weiteren Grenzwertrate ist, kann der Ratenbegrenzer den neuen Wert der Stellgröße bspw. mit der gewünschten Stellgrößenveränderungsrate erzeugen. In allen anderen Fällen kann der Ratenbegrenzer den neuen Wert der Stellgröße wie weiter oben beschrieben mithilfe der anderen Grenzwertrate erzeugen.

Das Erzeugen des neuen Werts der Stellgröße mit zwei unterschiedlichen Grenzwertraten ermöglicht es z.B. unterschiedliche Begrenzungen für das Erhöhen und Erniedrigen des Werts der Stellgröße zu implementieren und somit auch unterschiedliche Geschwindigkeiten für das Hoch- und Runterfahren der Regelstrecke.

Die Aufgabe wird des Weiteren gelöst durch ein Verfahren zum Regeln einer Regelstrecke mit einem fluidischen Antrieb, wobei der fluidische Antrieb der Regelstrecke zum Steuern einer Regelgröße geeignet ist und die Regelstrecke zum Steuern der Regelgröße mit einer Stellgröße beaufschlagt wird. Das Verfahren umfasst folgende Schritte:

1. Vorgeben eines Soll-Werts für die Regelgröße;
2. Bestimmen eines Ist-Werts und einer Veränderungsrate des Ist-Werts der Regelgröße;
3. Bestimmen einer gewünschten Veränderung eines Werts der Stellgröße anhand des vorgegebenen Soll-Werts der Regelgröße und des bestimmten Ist-Werts der Regelgröße;
4. Leiten der gewünschten Veränderung des Werts der Stellgröße an einen Ratenbegrenzer;
5. Erzeugen eines neuen Werts der Stellgröße mithilfe des Ratenbegrenzers und der gewünschten Veränderung des Werts der Stellgröße,
5.1 wobei ein Soll-Wert für die Veränderungsrate des Ist-Werts der Regelgröße vorgegeben wird, der negativ ist;
5.2 wobei eine Grenzwertrate anhand der Abweichung der Veränderungsrate des Ist-Werts der Regelgröße von dem Soll-Wert derart bestimmt wird, dass der Grenzwertrate ein größerer Wert zugewiesen wird, wenn die Veränderungsrate des Ist-Werts der Regelgröße kleiner als der Soll-Wert ist, und ein kleinerer Wert, wenn die Veränderungsrate des Ist-Werts der Regelgröße größer als der Soll-Wert ist, und

5.3 wobei der Ratenbegrenzer, falls die gewünschte Veränderung des Werts der Stellgröße einer gewünschten Stellgrößenveränderungsrate entspricht, die kleiner als die Grenzwertrate ist, den neuen Wert der Stellgröße mit einer Stellgrößenveränderungsrate erzeugt, die gleich der Grenzwertrate ist.

Das Verfahren kann - mutatis mutandis - in der gleichen Art und Weise ausgestaltet werden wie das zuerst genannte Verfahren, bei dem kein negativer, sondern ein positiver Soll-Wert für die Veränderungsrate des Ist-Werts der Regelgröße vorgegeben wird.

Die Aufgabe wird zudem gelöst durch einen Stellungsregler mit einem Strom-Druck-Wandler zur Regelung des Drucks eines Fluids in einem fluidischen Antrieb und/oder zur Regelung der Position eines beweglichen Glieds mithilfe eines fluidischen Antriebs und mit Mitteln, die geeignet sind, die Schritte eines der soeben vorgeschlagenen Verfahren auszuführen. Der Stellungsregler kann hierzu einen Drucksensor zum Messen des Drucks des Fluids in dem Antrieb und/oder einen Positionssensor zum Messen der Ist-Position des beweglichen Glieds aufweisen oder mit dem Drucksensor und/oder Positionssensor verbunden sein, bspw. über eine entsprechende Schnittstelle bzw. einen entsprechenden Eingang.

Der Drucksensor kann den Ist-Wert des Drucks des Fluids im Antrieb messen. Die Regelgröße kann demnach der Druck des Fluids in dem Antrieb sein oder eine von dem Druck des Fluids in dem Antrieb abhängige Größe.

Der Positionssensor kann den Ist-Wert der Position des beweglichen Glieds messen. Die Regelgröße kann demnach die Position des beweglichen Glieds sein oder eine von der Position des beweglichen Gliedes abhängige Größe.

Der Druck des Fluids in dem Antrieb kann zudem mithilfe eines Druck-Druck-Wandlers, z.B. mithilfe eines Luftleistungsverstärkers, verstärkt werden. Auf diese Weise lassen sich auch mit schwachen Strom-/Spannungssignalen starke fluidische Signale erzeugen und bspw. zum Betrieb eines fluidischen Antriebs nutzen.

Ferner wird die Aufgabe gelöst durch ein Stellventil zur Regelung einer Prozessfluidströmung einer prozesstechnischen Anlage, wobei das Stellventil einen Stellungsregler aufweist, wie er soeben beschrieben wurde.

Eine Lösung der Aufgabe stellt zudem ein Computerprogramm dar, umfassend Befehle, die bewirken, dass eine der soeben beschriebenen Vorrichtungen eines der vorgeschlagenen Verfahren ausführt.

Ein computerlesbares Medium, auf dem das soeben beschriebene Computerprogramm gespeichert ist, löst ebenfalls die Aufgabe.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1     einen Regelkreis mit Mitteln, die geeignet sind, die Schritte eines der vorge-schlagenen Verfahren auszuführen;

Fig. 2     eine Regelstrecke mit einem Strom-Druck-Wandler;

Fig. 3     die Strom-Druck-Kennlinie der in Fig. 2 gezeigten Regelstrecke;

Fig. 4     einen zeitlichen Verlauf des Ist-Werts des Drucks des in Fig. 1 dargestellten Regelkreises mit der in Fig. 2 dargestellten Regelstrecke mit erfindungsgemäßer Ratenbegrenzung bei einem Sprung des Sollwerts in einem Zeitraum von 0 bis 1 s;

Fig. 5     einen zeitlichen Verlauf der Veränderungsrate des Ist-Werts des Drucks, der in Fig. 4 dargestellt ist;

Fig. 6     einen zeitlichen Verlauf der Abweichungen der in Fig. 5 gezeigten Veränderungsrate von vorgegebenen Soll-Werten;

Fig. 7     einen zeitlichen Verlauf des gewünschten Werts y der Stellgröße für das in den Figuren 4, 5 und 6 gezeigte Beispiel;

Fig. 8     einen zeitlichen Verlauf des momentanen Werts der Stellgröße zusammen mit dem gewünschten Wert y der Stellgröße für das in den Figuren 4, 5, 6 und 7 gezeigte Beispiel;

Fig. 9     einen zeitlichen Verlauf der Grenzwertraten für das in den Figuren 4 bis 8 gezeigte Beispiel;

Fig. 10    einen zeitlichen Verlauf der normierten Werte für das in den Figuren 4 bis 9 gezeigte Beispiel; und

Fig. 11    einen Ablaufplan eines erfindungsgemäßen Verfahrens.

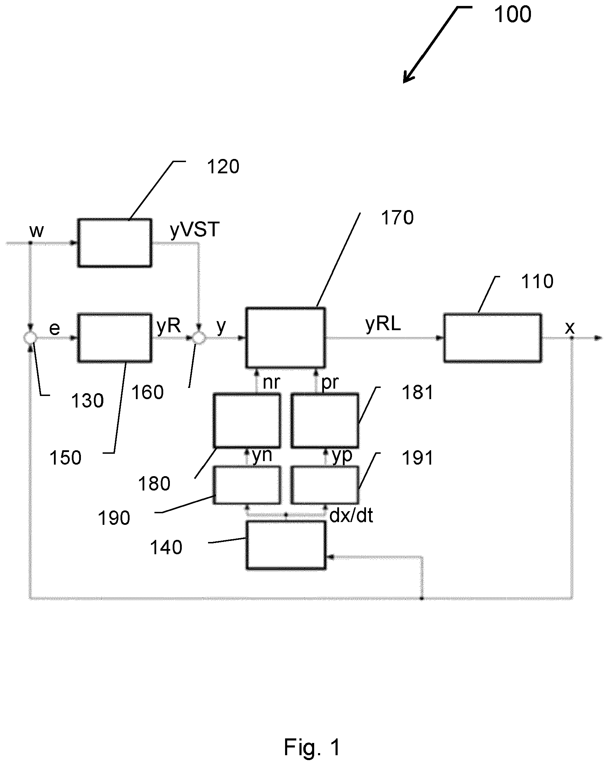

Fig. 1 zeigt einen Regelkreis 100 für eine Regelgröße einer Regelstrecke 110. Dem Regelkreis 100 wird ein Soll-Wert w für die Regelgröße der Regelstrecke 110 vorgegeben. Der Soll-Wert w wird in eine Vorsteuerung 120 (siehe unten) eingespeist.

Die Regelstrecke 110 weist einen fluidischen Antrieb und einen Sensor zum Bestimmen eines Ist-Werts x der Regelgröße auf. Der Ist-Wert x der Regelgröße wird von der Regelstrecke 110 zu einer Einheit 130 geleitet, die aus dem vorgegebenen Soll-Wert w und dem Ist-Wert x eine Regelabweichung e = w - x berechnet. Der Ist-Wert x wird zudem einem DT1-Glied 140 zugeführt, das aus dem zugeleiteten Ist-Wert x der Regelgröße eine Veränderungsrate dx/dt des Ist-Werts x der Regelgröße berechnet.

Die Regelabweichung e wird von der Einheit 130 an einen PID-Regler 150 übermittelt. Der PID-Regler 150 berechnet aus der Regelabweichung e eine gewünschte Veränderung yR für eine Stellgröße der Regelstrecke 110. Der Wert yR wird vom PID-Regler 150 an eine Einheit 160 übermittelt.

Die Einheit 160 empfängt von der Vorsteuerung 120 einen Kennlinienwert yVST für die Stellgröße. Den Kennlinienwert yVST bestimmt die Vorsteuerung 120 mithilfe einer gespeicherten Kennlinie, mit der jedem vorgegebenen Soll-Wert w ein Kennlinienwert yVST der Stellgröße zugewiesen werden kann.

Die Einheit 160 bildet aus den Werten yR und yVST einen gewünschten Wert y für die Stellgröße der Regelstrecke 110. Der gewünschte Wert y wird von der Einheit 160 an einen Ratenbegrenzer 170 übermittelt.

Der Ratenbegrenzer 170 vergleicht den gewünschten Wert y mit dem momentanen Wert yRL für die Stellgröße und erzeugt danach einen neuen Wert yRL für die Stellgröße. Der Ratenbegrenzer 170 übermittelt anschließend den neuen Wert yRL für die Stellgröße an die Regelstrecke 110.

Der Ratenbegrenzer 170 passt den neuen Wert yRL an den gewünschten Wert y an. Dabei verändert er den Wert yRL mit einer Stellgrößenveränderungsrate, die kleiner als oder gleich einer Grenzwertrate pr und größer als oder gleich einer weiteren Grenzwertrate nr ist. Der Ratenbegrenzer 170 kann dabei den Wert yRL direkt verändern, oder zunächst lediglich die Stellgrößenveränderungsrate, mit der anschließend der nächste Wert yRL für die Stellgröße berechnet wird.

Ist der Wert y bspw. kleiner als oder gleich dem momentanen Wert yRL der Stellgröße, begrenzt der Ratenbegrenzer 170 die Stellgrößenveränderungsrate derart, dass die Stellgrößenveränderungsrate die Grenzwertrate nr nicht unterschreitet. Die Grenzwertrate nr wird dem Ratenbegrenzer 170 von einer Einheit 180 übermittelt. Ist y größer als yRL, begrenzt der Ratenbegrenzer 170 die Stellgrößenveränderungsrate derart, dass die Stellgrößenveränderungsrate die Grenzwertrate pr nicht überschreitet. Der Wert pr wird dem Ratenbegrenzer 170 von einer Einheit 181 übermittelt. In der Regel wird die Grenzwertrate nr negative Werte annehmen. Sie kann jedoch auch positive Werte annehmen, womit ein Überschießen verhindert werden kann. Ähnliches gilt - *mutatis mutandis* - für die Grenzwertrate pr. Wird der Wert der Stellgröße bspw. in % angegeben, können die Grenzwertraten nr und pr deshalb Werte im Bereich von bspw. -200 %/s bis 200 %/s, -100 %/s bis 100 %/s, -50 %/s bis 50 %/s, -40 %/s bis 40 %/s, -30 %/s bis 30%/s, -20 %/s bis 20 %/s, -10 %/s bis 10 %/s, -5 %/s bis 5 %/s, -2 %/s bis 2 %/s, -1 %/s bis 1 %/s, -0,1 %/s bis 0,1 %/s oder -0,01 %/s bis 0,01 %/s annehmen.

Die Einheit 180 berechnet die Grenzwertrate nr mithilfe eines normierten Werts yn. Der normierte Wert yn ist ein Wert im Bereich von -1000 %/s bis 1000 %/s. Er kann auch ein Wert im Bereich von -100 %/s bis 100 %/s, von -10 %/s bis 10 %/s oder -1 %/s bis 1 %/s, von 0 %/s bis 1 %/s sein. Er kann auch ein dimensionsloser Wert im Bereich von -1000 bis 1000, von -100 bis 100, von -10 bis 10 oder -1 bis 1 oder von 0 bis 1 sein. Er kann auch in % angegeben werden und in Bereichen von -1000 % bis 1000 %, von -100 % bis 100 %, von - 10 % bis 10 % oder -1 % bis 1 %, von 0 % bis 1 % liegen. Dabei wird der normierte Wert yn der Grenzwertrate nr mithilfe einer vorgegebenen Kennlinie zugeordnet. Die vorgegebene Kennlinie kann bspw. einen linearen Zusammenhang bzw. eine Gerade mit positiver Steigung darstellen. Die Kennlinie kann auch stückweise definiert werden. Dabei kann bspw. ein Wert yn, der kleiner als oder gleich -100 %/s ist, einem minimalen Wert nrmin = -25 %/s und ein Wert yn, der größer als oder gleich 100 %/s ist, einem maximalen Wert nrmax = +10 %/s zugewiesen werden. Die Werte nrmin und nrmax können jedoch auch anders gewählt werden und dabei prinzipiell die gleichen Werte annehmen wie die Grenzwertrate nr (siehe die obigen Bereichsangaben für nr). Ein Wert yn, der zwischen -100 %/s und +100 %/s liegt, wird bspw. mithilfe eines linearen Zusammenhangs bzw. einer Gerade zugeordnet. Der minimale Wert nrmin und der maximale Wert nrmax bestimmen dabei die Steigung des linearen Zusammenhangs bzw. der Gerade. Die Steigung beträgt in diesem Beispiel somit (nrmax-nrmin) / 200 %/s = 0,175. Die zugehörige Geradengleichung bzw. der besagte lineare Zusammenhang ist für Werte von yn, die zwischen -100 %/s und +100 %/s liegen, gegeben durch:

$$nr = nrmin + ( yn + 100\ \%/s ) \cdot ( ( nrmax - nrmin ) / (200\ \%/s) ).$$

Der normierte Wert yn wird von einem PD-Glied 190 erzeugt. Das PD-Glied 190 erzeugt den normierten Wert yn anhand der Abweichung der Veränderungsrate dx/dt, die von der Einheit 140 an das PD-Glied 190 geleitet wird, von einem vorgegebenen Soll-Wert für die Veränderungsrate dx/dt des Ist-Werts x der Regelgröße. Wird der Soll-Wert für die Veränderungsrate dx/dt des Ist-Werts x der Regelgröße in dem oben genannten Beispiel für den linearen Zusammenhang zwischen nr und yn erreicht, begrenzt der Ratenbegrenzer 170 eine Erniedrigung des Werts yRL der Stellgröße auf eine Stellgrößenveränderungsrate von nr = - 7,5 %/s.

In ähnlicher Weise berechnet die Einheit 181 den Wert pr mithilfe eines normierten Werts yp. Der normierte Wert yp ist ein Wert im Bereich von -1000 %/s bis 1000 %/s. Er kann auch ein Wert im Bereich von -100 %/s bis 100 %/s, von -10 %/s bis 10 %/s oder -1 %/s bis 1 %/s, von 0 %/s bis 1 %/s sein. Er kann auch ein dimensionsloser Wert im Bereich von -1000 bis 1000, von -100 bis 100, von -10 bis 10 oder -1 bis 1 oder von 0 bis 1 sein. Er kann auch in % angegeben werden und in Bereichen von -1000 % bis 1000 %, von -100 % bis 100 %, von -10 % bis 10 % oder -1 % bis 1 %, von 0 % bis 1 % liegen. Dabei wird der normierte Wert yp dem Wert pr ebenfalls mithilfe einer vorgegebenen Kennlinie zugeordnet. Die vorgegebene Kennlinie kann bspw. einen linearen Zusammenhang bzw. eine Gerade mit positiver Steigung darstellen. Die Kennlinie kann auch stückweise definiert werden. Dabei kann bspw. ein Wert yp, der kleiner als oder gleich -100 %/s ist, einem minimalen Wert prmin = -10 %/s und ein Wert yp, der größer als oder gleich 100 %/s ist, einem maximalen Wert prmax = +25 %/s zugewiesen werden. Die Werte prmin und prmax können jedoch auch anders gewählt werden und dabei prinzipiell die gleichen Werte annehmen wie die Grenzwertrate pr (siehe die obigen Bereichsangaben für pr). Ein Wert yp, der zwischen -100 %/s und +100 %/s liegt, wird im Rahmen dieses Beispiels einer stückweise definierten Kennlinie mithilfe eines linearen Zusammenhangs bzw. einer Gerade zugeordnet. Der minimale Wert prmin und der maximale Wert prmax bestimmen dabei die Steigung des linearen Zusammenhangs bzw. der Gerade. Die Steigung beträgt in diesem Beispiel somit (prmax-prmin) / 200 %/s = 0,175. Die zugehörige Geradengleichung bzw. der besagte lineare Zusammenhang ist für Werte von yp, die zwischen -100 %/s und +100 %/s liegen, gegeben durch:

$$pr = prmin + ( yp + 100 \%/s ) \cdot ( ( prmax - prmin ) / (200 \%/s) ).$$

Der normierte Wert yp wird von einem PD-Glied 191 erzeugt. Das PD-Glied 191 erzeugt den normierten Wert yp anhand der Abweichung der Veränderungsrate dx/dt, die von der Einheit 140 an das PD-Glied 191 geleitet wird, von einem weiteren vorgegebenen Soll-Wert für die Veränderungsrate dx/dt des Ist-Werts x der Regelgröße. Wird der Soll-Wert für die Veränderungsrate dx/dt des Ist-Werts x der Regelgröße in dem oben genannten Beispiel für den linearen Zusammenhang zwischen pr und yp erreicht, begrenzt der Ratenbegrenzer 170 eine Erhöhung des Werts yRL der Stellgröße auf eine Stellgrößenveränderungsrate von pr = +7,5 %/s.

Um die Stabilität des Regelkreises 100 zu erhöhen, ist der Ratenbegrenzer 170 so eingerichtet, dass er der Grenzwertrate pr nur dann einen neuen Wert zuweist, falls die Abweichung der Veränderungsrate dx/dt des Ist-Werts x der Regelgröße von dem Soll-Wert betragsmäßig größer ist als ein positiver Mindestwert. Der positive Mindestwert kann bspw. 5 %/s, 2 %/s, 1 %/s, 0,5 %/s, 0,2 %/s, 0,1 %/s, 0,05 %/s, 0,02 %/s oder 0,01 %/s betragen.

Durch die Anpassung der Werte nr und pr an die Abweichung der Veränderungsrate dx/dt des Ist-Werts x der Regelgröße von einem Soll-Wert kann die Regelgüte des Regelkreises 100 verbessert werden. Verändert sich der Ist-Wert x der Regelgröße trotz einer Änderung des Werts yRL der Stellgröße nicht (dx/dt=0), werden den Werten nr und pr Werte zugewiesen, die betragsmäßig größer sind. Der Regelkreis kann damit Zustände schneller überwinden, in denen bspw. Verzögerungen und Hysterese eine Veränderung des Ist-Werts x der Regelgröße blockieren. Verändert sich anschließend der Ist-Wert x der Regelgröße bzw. reagiert die Regelstrecke auf die veränderten Werte yRL der Stellgröße (dx/dt>0 oder dx/dt<0), werden die Beträge der Werte nr und pr reduziert oder sogar auf Werte gesetzt, mit denen Ratenbegrenzer 170 der gewünschten Veränderung y des Werts yRL der Stellgröße entgegenwirkt. Auf diese Weise kann ein Überschwingen des Regelkreises 100 verhindert oder zumindest reduziert werden. Dabei wird die Verbesserung der Regelgüte auch dann erzielt, wenn die Verzögerung bzw. Hysterese plötzlich bzw. unerwartet auftritt.

Die Werte nr und pr können betragsmäßig gleich sein. Sie können aber auch unterschiedlich gewählt werden. Dies kann nicht nur zur Verbesserung der Regelgüte genutzt werden. Es können auch unterschiedliche Regelgüten bzw. Regelzeiten für eine Regelung hin zu größeren bzw. kleineren Werten des Ist-Werts x der Regelgröße umgesetzt werden.

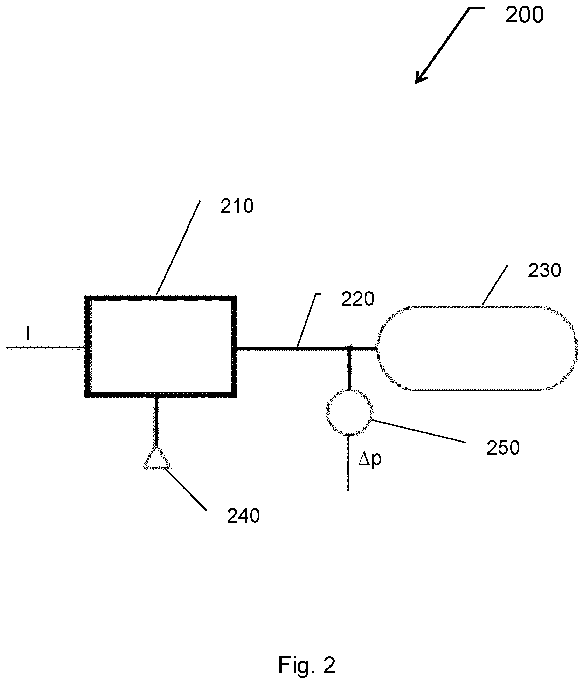

Fig. 2 zeigt ein Beispiel für eine Regelstrecke 200. Die Regelstrecke 200 weist einen Strom-Druck-Wandler 210 auf, der mit einem Stromsignal I beaufschlagt wird. Der Strom-Druck-Wandler 210 ist an eine Druckluftversorgung 240 angeschlossen. Die Druckluftversorgung 240 stellt Druckluft mit einem konstanten Druck bereit. Mithilfe eines beweglichen Stellelements und eines Luftleistungsverstärkers kann der Strom-Druck-Wandler 210 in bekannter Weise den Druck der Druckluftversorgung 240 auf einen gewünschten Wert reduzieren.

Der Strom-Druck-Wandler 210 ist mit einer Druckluftleitung 220 an eine Druckluftkammer 230 eines pneumatischen Antriebs angeschlossen. Der Strom-Druck-Wandler 210 kann abhängig von der Stärke des Stromsignals I den Druck in der Druckluftleitung 220 und der Druckluftkammer 230 verändern und damit den pneumatischen Antrieb steuern.

Der Druck in der Druckluftleitung 220 wird mithilfe eines Druckmessers 250 bestimmt. Der Druckmesser 250 gibt als Ergebnis der Messung des Drucks den gemessenen Ist-Wert $\Delta p$ des Drucks in der Druckluftleitung 220 (und damit auch in der Druckluftkammer 230) abzüglich des Umgebungsdrucks aus.

Die Druckluftversorgung 240 stellt häufig Druckluft mit einem Druck von bis zu 7 bar zur Verfügung. Die Druckluftkammer 230 weist ein Volumen von beispielsweise 0,1 l auf, was sehr klein ist bezogen auf die Luftleistung, die der Strom-Druck-Wandler 210 bereitstellen kann. Sie kann von dem Strom-Druck-Wandler 210 mithilfe der Druckluftversorgung 240 und der Druckluftleitung 220 in vielen Anlagen mit einer Luftleistung von bis zu 8,5 m$^3$/h beim Belüften und 14 m$^3$/h beim Entlüften bei 6 bar Differenzdruck versorgt werden. Die Luftleistung des Strom-Druck-Wandlers ist demnach viel zu groß für das Volumen der Druckluftkammer 230. Dadurch stellt die Regelstrecke 200 ein sehr schnelles, dynamisches System dar und ist schon aus diesem Grund mit herkömmlichen Methoden der Regeltechnik schwer zu regeln. Schließlich lassen sich mit den genannten Parametern Reaktionszeiten von 0,1 bis 0,2 s erreichen, in denen das Volumen auf den gewünschten Druck gebracht werden kann.

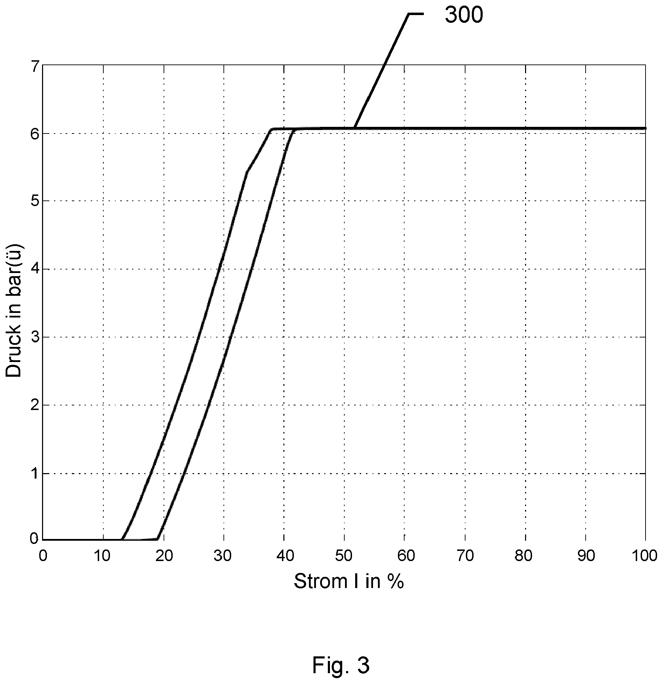

Fig. 3 zeigt die quasi-statische Strom-Druck-Kennlinie 300 der Regelstrecke 200. Die Strom-Druck-Kennlinie 300 der Regelstrecke 200 zeigt eine stark ausgeprägte Hysterese. Die Kennlinie 300 ist demnach aus zwei Ästen aufgebaut: einem Ast fürs Belüften (rechter Ast) und einem Ast fürs Entlüften (linker Ast) der Druckluftkammer 230. Der Strom ist in Prozent angegeben, wobei 100 % einem Stromwert von 1,6 mA entsprechen.

Die Hysterese der Kennlinie 300 ist in unterschiedlichen Bereichen unterschiedlich stark ausgeprägt. Im Druckbereich von 0,5 auf 1,0 bar(ü) (d.h. bei 0,5 bis 1,0 bar über dem Umgebungsdruck) kann die relative Hysterese mit einer Stärke von ca. 240 % angegeben werden. Schließlich liegen die Stromwerte auf dem rechten Ast der Kennlinie (Belüften) in einem Bereich von 21,2 % bis 23,5 % und auf dem linken Ast (zum Entlüften) in einem Bereich von 17,9 % bis 15,7 %. Der erst genannte Bereich überspannt somit ca. 2,2 %. Im Verhältnis hierzu beträgt der Abstand der Äste - z.B. gemessen bei einem vorgegebenen Druck von 1 bar - das 2,4-fache, d.h. 5,6 %. Dies entspricht einer relativen Hysterese mit einer Stärke von 5,6 % / 2,2 % = 2,4 bzw. 240 %.

Die stark ausgeprägte Hysterese der Regelstrecke 200 hat ihren Ursprung einerseits in der Art wie der Strom-Druck-Wandler sein Stellelement bewegt. Der Strom-Druck-Wandler 210 bewegt sein bewegliches Stellelement mithilfe eines Elektromagneten, was starke Hysterese-Effekte zeigt. Andererseits trägt der Einsatz eines nachgeschalteten Luftleistungsverstärkers ebenfalls zur Hysterese der Regelstrecke 200 bei (bspw. bei Einsatz eines bekannten Doppelkegel-Luftleistungsverstärkers).

Die zu große Luftleistung des Strom-Druck-Wandlers 210 in Kombination mit der ausgeprägten Hysterese der Regelstrecke 200 stellt in Summe ein System dar, das in vielen Fällen ohne Ratenbegrenzer nicht stabil geregelt werden kann. Selbst beim Einsatz eines herkömmlichen Ratenbegrenzers treten in vielen Fällen langlebige Schwingungen um den Soll-Wert w der Regelgröße auf, mit entsprechend langen Totzeiten.

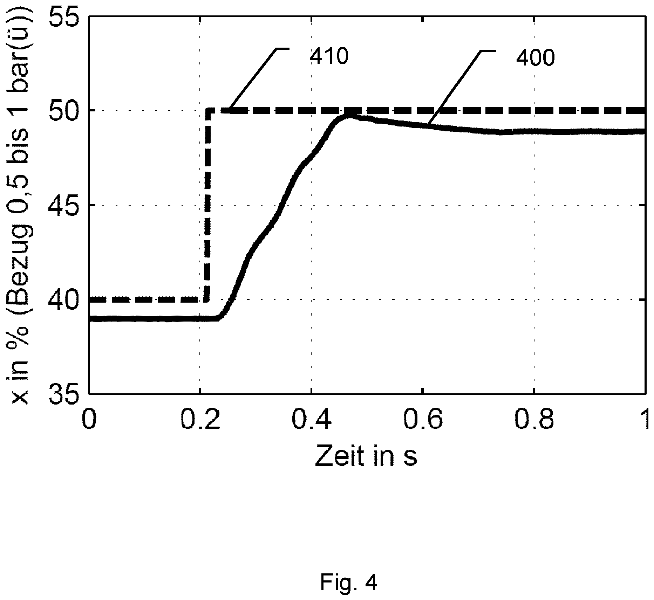

Fig. 4 zeigt einen zeitlichen Verlauf 400 (durchgezogene Linie) des Ist-Werts x der Regelgröße sowie einen zeitlichen Verlauf 410 (gestrichelte Linie) des Soll-Werts w der Regelgröße einer Ausführungsform des Regelkreises 100 mit der betriebenen Regelstrecke 110, 200. Die zeitlichen Verläufe 400 und 410 sind über einen Zeitraum von 0 bis ca. 1 s gezeigt. Dabei ist der Ist-Wert x der Regelgröße der Ist-Wert $\Delta p$ der Regelstrecke 200 umgerechnet in %, wobei x = 0 % einem Differenzdruck $\Delta p$ von 0,5 bar und x = 100 % einem Differenzdruck $\Delta p$ von 1 bar entspricht. Der zeitliche Verlauf liegt damit in dem Druckbereich der Kennlinie 300, in dem die relative Hysterese ca. 240 % beträgt (siehe Fig. 3). Zudem wurde für die Bestimmung der Grenzwertrate pr ein Soll-Wert für die Veränderungsrate dx/dt des Ist-Werts x der Regelgröße von +33 %/s vorgegeben und die oben angegebene stückweise definierte Kennlinie für die Zuordnung der normierten Werte yp verwendet. Die Grenzwertrate nr wurde mit einem Soll-Wert für die Veränderungsrate dx/dt des Ist-Werts x der Regelgröße von -33 %/s und der oben angegebenen stückweise definierten Kennlinie für die Zuordnung der normierten Werte yn bestimmt. Der positive Mindestwert betrug 2 %/s, d.h. der Grenzwertrate pr wurde nur dann ein neuer Wert zugewiesen, wenn die Veränderungsrate dx/dt des Ist-Werts x der Regelgröße kleiner als 31 %/s oder größer als 35 %/s war. In ähnlicher Weise wurde der Grenzwertrate nr nur dann ein neuer Wert zugewiesen, wenn die Veränderungsrate dx/dt des Ist-Werts x der Regelgröße kleiner als -35 %/s oder größer als -31 %/s war.

Der Ist-Wert x und der Soll-Wert w sind anfangs sehr ähnlich. Sie weichen lediglich um 2 % voneinander ab. Nach ca. 0,2 s springt jedoch der Soll-Wert w von 40 % auf 50 %. Der Soll-Wert w wird anschließend nicht mehr verändert.

Dem zeitlichen Verlauf 400 ist zu entnehmen, dass der Ist-Wert x der Regelgröße dem Sprung des Soll-Werts w bei ca. 0,2 s mit einer Verzögerung von ca. 0,02 s folgt. Danach wächst der Ist-Wert x im Wesentlichen linear und erreicht bei ca. 0,45 s den Soll-Wert. Hiernach fällt der Ist-Wert x wieder. Er kriecht dabei in nahezu monoton fallender Weise auf einen Wert zu, der eine sehr ähnliche Abweichung von dem neuen Soll-Wert aufweist, die auch schon zu Anfang bei 0 s zu beobachten war. Das System ist nach etwa 0,7 s stabil ausgeregelt.

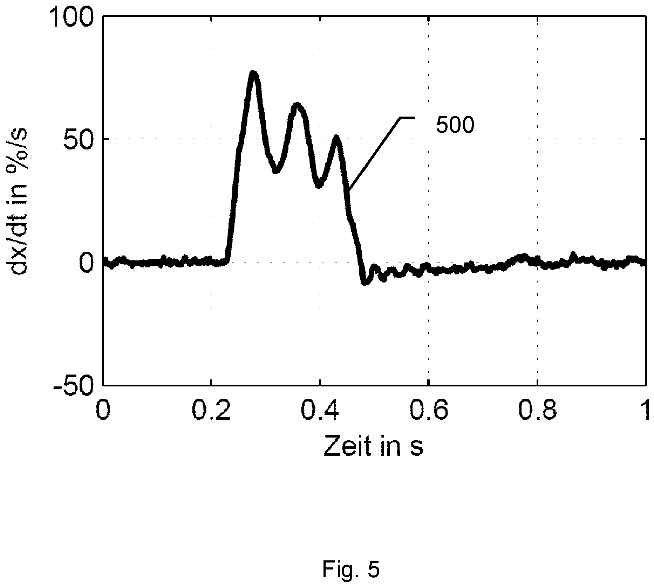

Fig. 5 zeigt zum besseren Verständnis der Dynamik den zum zeitlichen Verlauf 400 zugehörigen zeitlichen Verlauf 500 der Veränderungsrate dx/dt. Wie der Figur entnommen werden kann, ändert sich der Ist-Wert x der Regelgröße anfangs nahezu nicht. Er stimmt mit dem zu diesem Zeitpunkt gültigen Soll-Wert w von 40% hinreichend überein (die kleine Abweichung zwischen dem Ist-Wert x und dem Soll-Wert w bei 0s ist einem vorhergehenden Regelvorgang zuzuschreiben). Der Soll-Wert w wird nach ca. 0,2 s auf 50% angehoben. Der Ist-Wert x der Regelgröße bzw. die zugehörige Veränderungsrate dx/dt folgt dieser Veränderung des Soll-Werts w mit einer Verzögerung von ca. 0,02 s. Dabei steigt die Veränderungsrate bei ca. 0,22 s stark an und erreicht ein erstes Maximum bei ca. 0,27 s. Hiernach fällt die Veränderungsrate wieder und erreicht ein lokales Minimum bei ca. 0,33 s. Diesem ersten Peak folgen zwei weitere. Schließlich sackt die Veränderungsrate dx/dt nach ca. 0,44 s stark ab, erreicht bei ca. 0,45 s negative Werte und pendelt sich danach bei Werten um 0 %/s ein, die wesentlich kleiner sind als die Werte, die die Veränderungsrate dx/dt zwischen 0,22 s und 0,45 s annimmt.

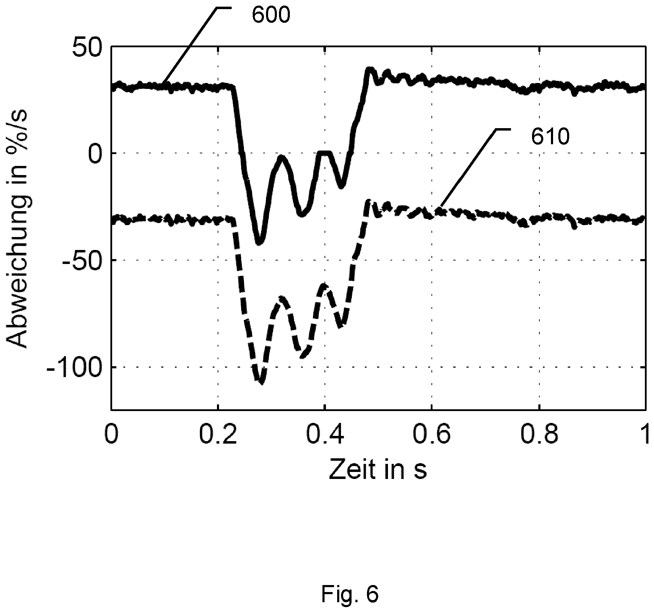

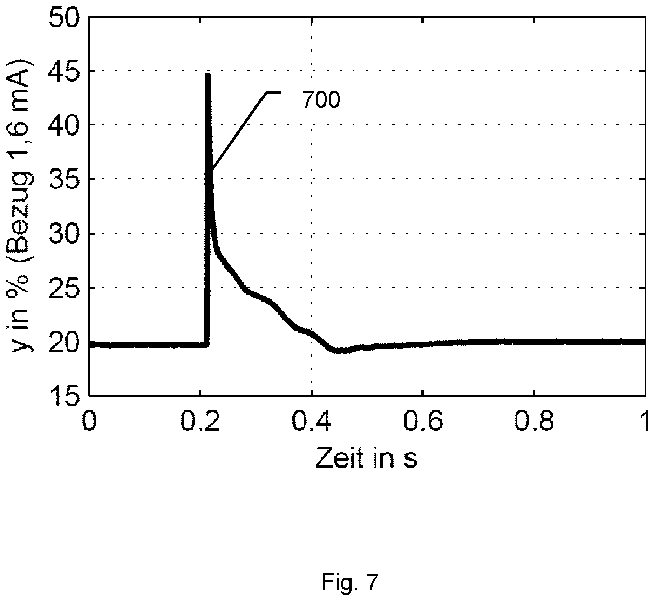

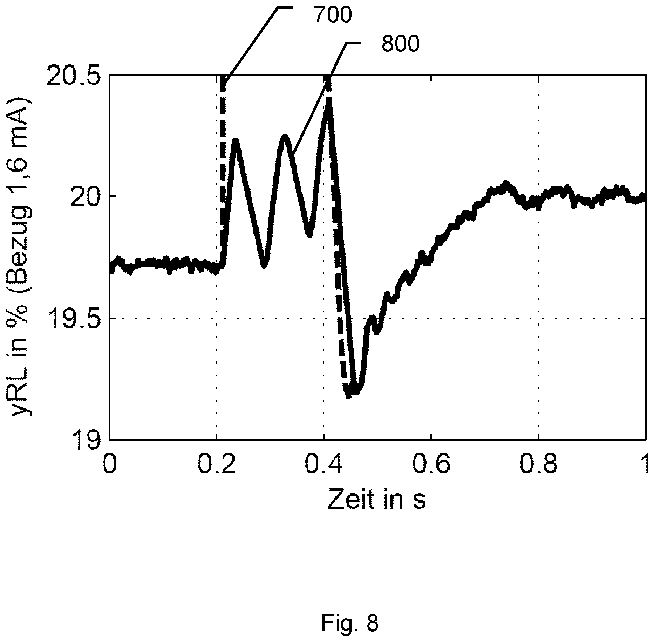

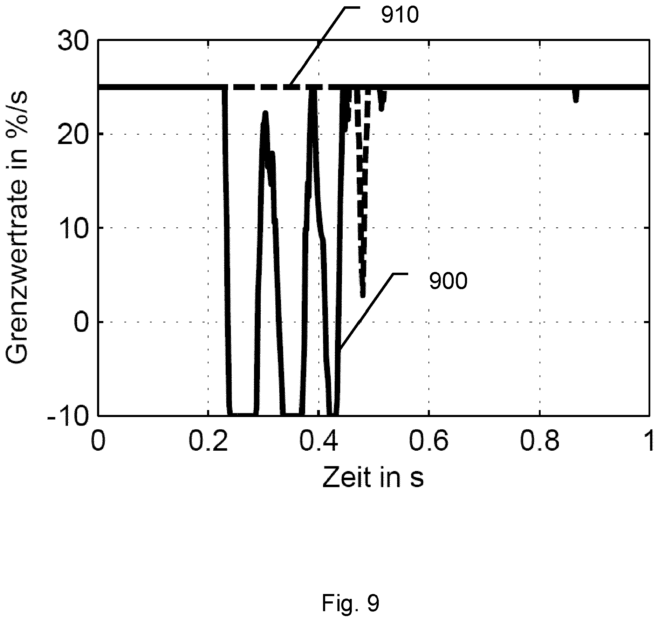

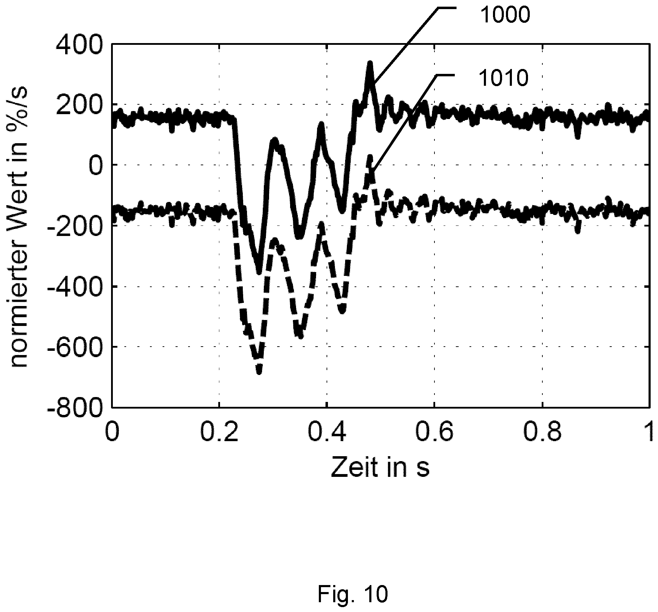

Das Verhalten der zeitlichen Verläufe 400 und 500 soll im Folgenden näher erläutert werden. Dazu werden zunächst die Abweichungen der Veränderungsrate dx/dt von den Soll-Werten 33 %/s und -33 %/s betrachtet (Fig. 6). Als nächstes werden die den zeitlichen Verläufen 400 und 500 entsprechenden gewünschten Werte y (Fig. 7) und die Werte yRL der Stellgröße (Fig. 8) diskutiert. Abschließend werden die Werte der Grenzwertraten nr und pr (Fig. 9) betrachtet, mit denen die Stellgrößenveränderungsrate des Werts yRL der Stellgröße begrenzt wird, sowie die Stellgrößenveränderungsrate selbst (Fig. 10).

Fig. 6 zeigt einen zeitlichen Verlauf 600 der Abweichung der Veränderungsrate dx/dt des Ist-Werts x der Regelgröße von dem Soll-Wert von +33%/s für die Berechnung der Grenzwertrate pr und einen zeitlichen Verlauf 610 der Abweichung der Veränderungsrate dx/dt des Ist-Werts x der Regelgröße von dem Soll-Wert von -33%/s für die Berechnung der Grenzwertrate nr. Die Abweichung wird dabei durch Subtraktion der zeitlichen Veränderungsrate dx/dt von dem jeweiligen Soll-Wert bestimmt. Die zeitlichen Verläufe 600 und 610 sind deshalb nahezu identisch zu dem zeitlichen Verlauf 500 multipliziert mit dem Faktor (-1). Sie sind zudem um einen festen Betrag nach oben bzw. unten verschoben.

Während der zeitliche Verlauf 610 ausschließlich negative Werte aufweist, startet der zeitliche Verlauf 600 mit positiven Werten, zeigt aber bei ca. 0,24 s einen Wechsel zu negativen Werten. Erst bei ca. 0,45 s wechselt er wieder zu positiven Werten.

Fig. 7 zeigt einen zeitlichen Verlauf 700 des gewünschten Werts y der Stellgröße. Der Wert y ist dabei so normiert, dass y = 0 % dem Strom-Wert von I = 0 % (0 mA) und y = 100 % dem Strom-Wert von 100 % (1,6 mA) in Fig. 3 entsprechen. Er wurde parallel zu den Verläufen 400, 500 und 600 der oben beschriebenen Ausführungsform des Regelkreises 100 aufgezeichnet. Der gewünschte Wert y startet bei ca. 19,7 %. Aufgrund des sprunghaften Anstiegs des Soll-Werts w bei ca. 0,2 s zeigt der zeitliche Verlauf 700 des gewünschten Werts y nahezu zeitgleich einen sehr starken Anstieg und ein ausgeprägtes Maximum. Danach fällt der Wert wieder und sinkt dabei auf Werte von bis zu ca. 19,3 % ab, was unter dem anfänglichen Niveau von 19,7 % liegt. Danach wächst der Wert wieder und pendelt sich schließlich bei ca. 20 % ein.

Fig. 8 zeigt nochmal den zeitlichen Verlauf 700 des gewünschten Werts y der Stellgröße, allerdings in einem Bereich von 19 % bis 20,5 %. Dadurch ist ein großer Teil des ausgeprägten Maximums bei ca. 0,21 s nicht mehr zu sehen. Jedoch ist die Dynamik zu Beginn und nach ca. 0, 4 s besser aufgelöst. Zudem ist in Fig. 8 ein zeitlicher Verlauf 800 des Werts yRL der Stellgröße gezeigt. Der Wert yRL ist dabei in derselben Art und Weise normiert wie der Wert y. Er wurde ebenfalls parallel zu den Verläufen 400, 500, 600 und 700 der oben beschriebenen Ausführungsform des Regelkreises 100 aufgezeichnet.

Der zeitliche Verlauf 800 des Werts der Stellgröße weist im Gegensatz zu dem zeitlichen Verlauf 700 geringere Schwankungen auf. Die Schwankungen liegen im Bereich zwischen 19,3 % und 20,3 %. Dabei stimmt der Wert yRL der Stellgröße anfangs mit dem gewünschten Wert y überein. Beim Sprung des Soll-Werts bei ca. 0,2 s wächst der Wert yRL jedoch weit weniger stark an als der gewünschte Wert y der Stellgröße, erreicht ein erstes Maximum bei ca. 0,22 s und sinkt danach wieder auf 19,7 % ab. Diesem ersten Peak folgen zwei weitere - ähnlich zu dem zeitlichen Verlauf 500 der Veränderungsrate dx/dt. Die Peaks des zeitlichen Verlaufs 800 treten jedoch im Vergleich zu den Peaks des zeitlichen Verlaufs 500 der Veränderungsrate dx/dt des Ist-Werts x der Regelgröße etwas früher auf, und zwar um ca. 0,05 s. Nachdem der zeitliche Verlauf 800 das letzte Minimum bei ca. 0,44 s erreicht hat, stimmt er wieder mit dem Verlauf 700 überein.

Der Wert yRL der Stellgröße wächst bei ca. 0,2 s weniger stark an als der gewünschte Wert y, da der Ratenbegrenzer 170 das Wachstum des Werts yRL bzw. die Stellgrößenveränderungsrate mit der Grenzwertrate pr beschränkt. Dies gilt für den gesamten Bereich von ca. 0,2 s bis 0,4 s, in dem der gewünschte Wert y größer als der Wert yRL ist. In diesem Bereich weist der zeitliche Verlauf 800 mehrere lokale Maxima und Minima auf, was darauf hindeutet, dass die Grenzwertrate pr zwischenzeitlich negative Werte annimmt. Im Bereich von ca. 0,4 s bis ca. 0,44 s wird die Veränderung des Werts yRL bzw. die Stellgrößenveränderungsrate durch die Grenzwertrate nr begrenzt.

Fig. 9 zeigt einen zeitlichen Verlauf 900 der Grenzwertrate pr und einen zeitlichen Verlauf 910 der Grenzwertrate nr, wobei die Grenzwertrate nr mit einem Faktor (-1) multipliziert wurde, um die Raten besser vergleichen zu können. Zu Beginn ist die Grenzwertrate pr gleich dem maximalen Wert prmax = 25 %/s. Dies ändert sich erst zu dem Zeitpunkt, an dem sich der Ist-Wert x der Regelgröße ändert und sich dem Soll-Wert von +33 %/s annähert. Sobald die Veränderungsrate dx/dt über den Soll-Wert hinausschießt und ihren ersten Peak durchläuft, fällt die Grenzwertrate pr auf -10 %/s. Sie kehrt zu dem Ausgangswert von 25 %/s zurück, sobald die Veränderungsrate dx/dt ihr lokales Minimum bei ca. 0,33 s durchläuft. Entsprechend der weiteren Peaks im zeitlichen Verlauf 500 der Veränderungsrate dx/dt wechselt die Grenzwertrate pr noch zweimal zwischen den Werten prmin und prmax hin und her. Dagegen bleibt die Grenzwertrate nr nahezu konstant auf dem Wert -25 %/s. Schließlich nähert sich die Veränderungsrate dx/dt zu Beginn nicht dem Soll-Wert von -33 %/s, sondern entfernt sich davon. Erst nach ca. 0,45 s, wenn die Veränderungsrate dx/dt negative Werte erreicht, die Grenzwertrate nr mehrere kurzfristige Ausschläge zu höheren Werten hin.

Fig. 10 zeigt einen zeitlichen Verlauf 1000 des normierten Werts yp und einen zeitlichen Verlauf 1010 des normierten Werts yn. Die zeitlichen Verläufe 1000 und 1010 der normierten Werte yp und yn folgen im Wesentlichen den Verläufen 600 und 610 der Abweichung der Veränderungsrate dx/dt von den Soll-Werten +33 %/s und -33 %/s. Fluktuationen und Rauscheffekte werden durch die P- und D-Elemente der PD-Glieder 190 und 191 jedoch verstärkt.

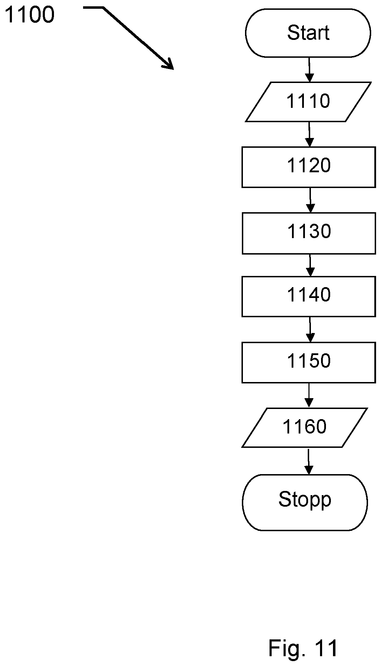

Fig. 11 zeigt einen Ablaufplan einer bevorzugten Ausführungsform eines erfindungsgemäßen Verfahrens 1100, das auf dem Regelkreis 100 abläuft. Das Verfahren beginnt mit Schritt 1110, in dem die Verfahrensparameter vorgegeben werden, insbesondere der Soll-Wert w der Regelgröße. In Schritt 1120 wird der Ist-Wert x der Regelgröße sowie die Veränderungsrate dx/dt des Ist-Werts x der Regelgröße bestimmt. Anhand des in Schritt 1120 bestimmten Ist-Werts x der Regelgröße sowie der Veränderungsrate dx/dt des Ist-Werts x der Regelgröße wird in Schritt 1130 eine gewünschte Veränderung y des momentanen bzw. Ist-Werts yRL der Stellgröße bestimmt. Die gewünschte Veränderung y wird anschließend in Schritt 1140 an den Ratenbegrenzer 170 geleitet, der in Schritt 1150 die gewünschte Veränderung y mit dem momentanen Wert yRL vergleicht und in eine Veränderung des Ist-Werts yRL umsetzt. Dabei lässt der Ratenbegrenzer 170 nur Veränderungen des Ist-Werts yRL zu, die einer Stellgrößenveränderungsrate entsprechen, die größer als oder gleich der Grenzwertrate nr und kleiner als oder gleich der Grenzwertrate pr sind. Dabei werden die Grenzwertraten pr und nr vom Ratenbegrenzer 170 anhand der Abweichung der Veränderungsrate dx/dt von einem vorgegebenen Soll-Wert für die Bestimmung der Grenzwertrate pr und der Abweichung der Veränderungsrate dx/dt von einem vorgegebenen Soll-Wert für die Bestimmung der Grenzwertrate nr derart bestimmt, dass den Grenzwertraten pr und nr ein größerer Wert zugewiesen wird, wenn die Veränderungsrate (dx/dt) des Ist-Werts (x) der Regelgröße kleiner als der Soll-Wert für die Bestimmung der jeweiligen Grenzwertrate ist, und ein kleinerer Wert, wenn die Veränderungsrate (dx/dt) des Ist-Werts (x) der Regelgröße größer als der Soll-Wert für die Bestimmung der jeweiligen Grenzwertrate ist. In Schritt 1160 wird der vom Ratenbegrenzer 170 in Schritt 1150 angepasste Wert yRL der Stellgröße ausgegeben.

Glossar

DT1-Glied

Ein DT1-Glied umfasst einen Differenzierer (D-Glied) und ein Verzögerungsglied 1. Ordnung (PT1-Glied). Mit dem D-Glied kann die erste zeitliche Ableitung eines zeitlich veränderlichen Eingangssignals gebildet werden. Dabei werden in der Regel Fluktuationen und/oder Rauschen des Eingangssignals verstärkt. Durch den Einsatz des Verzögerungsglieds 1. Ordnung können die Fluktuationen und/oder das Rauschen des Eingangssignal sowie deren Verstärkung durch den Differenzierer bzw. das D-Glied unterdrückt oder wenigstens reduziert werden.

Fluidischer Antrieb

Ein fluidischer Antrieb oder fluidischer Aktuator ist eine Einheit, die ein fluidisches Signal bzw. eine fluidische Signalfolge, z.B. von einem Strom-Druck-Wandler, in mechanische Bewegungen bzw. Veränderungen physikalischer Größen wie Druck oder Temperatur umsetzt. Fluidische Antriebe eignen sich z.B. zum Steuern oder Regulieren eines Prozesses einer verfahrenstechnischen Anlage. Ein fluidischer Antrieb kann entweder mit einer Flüssigkeit oder einem Gas, z.B. hydraulisch und/oder mit Druckluft, betrieben werden.

Führungsgröße

Siehe Regelkreis.

Hysterese

Hysterese bezeichnet das Verhalten eines Systems, bei dem eine Ausgangsgröße bzw. Eigenschaft des Systems nicht allein von einer unabhängig veränderlichen Eingangsgröße des Systems abhängt, mit der die Ausgangsgröße bzw. das System beeinflusst werden kann, sondern auch vom vorhergehenden Zustand der Ausgangsgröße bzw. des Systems. Das System kann also - abhängig von dem Zustand, in dem sich das System befindet, oder den Zuständen, in denen sich das System befunden hat - bei gleicher Eingangsgröße einen von mehreren möglichen Zuständen einnehmen, mit entsprechend unterschiedlichen Werten der Ausgangsgröße. Dieses Verhalten wird auch Pfadabhängigkeit genannt und wird oft mit sogenannten Hystereseschleifen veranschaulicht. Hystereseschleifen entstehen, wenn zwischen zwei Werten der Eingangsgröße hin- und hergeschaltet wird. Sie werden aufgezeichnet, indem beim Hin- und Herschalten die Werte der Ausgangsgröße gegen die Werte der Eingangsgröße aufgetragen werden. Hysterese tritt bei vielen natürlichen und technischen Vorgängen auf, insbesondere bei der Magnetisierung eines Magneten oder in Regelkreisen.

Ist-Wert

Ein Ist-Wert stellt den Wert einer physikalischen Regelgröße zu einem bestimmten Zeitpunkt dar. In vielen Fällen wird der Ist-Wert einer physikalischen Regelgröße mit dem Wert gleichgesetzt, den die physikalische Regelgröße momentan bzw. zum gegenwärtigen Zeitpunkt hat bzw. den ein Sensor oder eine Messapparatur zum Messen der physikalischen Regelgröße momentan bzw. zum gegenwärtigen Zeitpunkt misst. Der bestimmte Zeitpunkt kann sich aber auch auf einen Zeitpunkt sowohl in der Vergangenheit oder Zukunft beziehen. Ein Ist-Wert ist häufig der Ausgangspunkt für eine zielgerichtete Regelung der Regelgröße eines Regelkreises hin zu einem Soll-Wert der Regelgröße.

Rate / Änderungsrate / Veränderungsrate

Eine Rate / Änderungsrate / Veränderungsrate eines Werts einer Größe gibt die Veränderung des Werts der Größe über einen bestimmten Zeitraum im Verhältnis zur Dauer dieses Zeitraums an. Sie ist demnach ein Maß dafür, wie schnell sich der Wert der Größe ändert. Durch den Bezug auf die Zeitdauer enthält die Maßeinheit der Rate / Änderungsrate / Veränderungsrate im Nenner eine Zeiteinheit und im Zähler die Einheit, mit der der Wert der zeitabhängigen Größe angegeben wird. Die Veränderungsrate einer Größe entspricht häufig der ersten zeitlichen Ableitung der Größe.

Regelgröße

Siehe Regelkreis.

Regelkreis

Ein Regelkreis umfasst einen Regler, der mit einer Stellgröße Einfluss auf eine Regelstrecke nimmt, um den Ist-Wert einer Regelgröße der Regelstrecke hin zu einem Soll-Wert zu führen. Hierzu wird der Ist-Wert der Regelgröße in der Regel fortlaufend bzw. regelmäßig bzw. in definierten Zeitintervallen neu bestimmt, d.h. in vorgegebenen oder bestimmten Zeitintervallen gemessen oder mithilfe von Messwerten berechnet. Die Stellgröße bzw. der momentane Wert der Stellgröße wird vom Regler entsprechend angepasst, um den Ist-Wert der Regelgröße hin zu dem Soll-Wert zu führen. Dabei ist die Stellgröße so definiert, dass - zumindest im ausgeregelten Zustand - höhere Ist-Werte der Regelgröße mit höheren Werten der Stellgröße erreicht werden. Der Soll-Wert wird meist von außen vorgegeben.

Regelstrecke

Siehe Regelkreis.

Soll-Wert

Der Soll-Wert stellt einen vorgegebenen bzw. angestrebten Wert einer physikalischen Größe dar, von dem der Ist-Wert der physikalischen Größe im Idealfall so wenig wie möglich abweichen soll. Ein Soll-Wert ist in vielen Fällen das Ziel einer Regelung einer Regelgröße eines Regelkreises. Im Idealfall stimmt zumindest als Ergebnis der Regelung der Ist-Wert der Regelgröße mit dem angestrebten Soll-Wert überein oder weicht davon lediglich im Rahmen der mit der Regelung erreichbaren Genauigkeit bzw. Toleranz ab.

Stellgröße

Siehe Regelkreis.

Bezugszeichen

| | |
|---|---|
| 100 | Regelkreis |
| 110 | Regelstrecke |
| 120 | Vorsteuerung |
| 130 | Einheit zum Bestimmen einer Regelabweichung |
| 140 | DT1-Glied |
| 150 | Regler |

| 160 | Einheit zum Bilden eines gewünschten Werts |
| 170 | Ratenbegrenzer |
| 180 | Einheit zum Bestimmen einer Grenzwertrate nr |
| 181 | Einheit zum Bestimmen einer Grenzwertrate pr |
| 190 | PD-Regler |
| 191 | PD-Regler |
| dx/dt | Veränderungsrate des Ist-Werts x der Regelgröße |
| e | Regelabweichung |
| nr | Grenzwertrate |
| pr | Grenzwertrate |
| w | Soll-Wert einer Regelgröße |
| x | Ist-Wert einer Regelgröße |
| y | gewünschter Wert einer Stellgröße |
| yn | normierter Wert |
| yp | normierter Wert |
| yR | gewünschte Veränderung einer Stellgröße |
| yRL | momentaner Wert der Stellgröße |
| yVST | Kennlinienwert |

| 200 | Regelstrecke |
| 210 | Strom-Druck-Wandler |
| 220 | Druckluftleitung |
| 230 | Druckluftkammer eines pneumatischen Antriebs |
| 240 | Druckluftversorgung |
| 250 | Druckmesser |
| I | Stromsignal |
| $\Delta p$ | Ist-Wert einer Druckdifferenz |

| 300 | Strom-Druck-Kennlinie |

| 400 | zeitlicher Verlauf des Ist-Werts x der Regelgröße |
| 410 | zeitlicher Verlauf des Soll-Werts w der Regelgröße |

| 500 | zeitlicher Verlauf der Veränderungsrate dx/dt des Ist-Werts x der Regelgröße |

| 600 | zeitlicher Verlauf 600 der Abweichung der Veränderungsrate dx/dt des Ist-Werts x der Regelgröße von dem Soll-Wert für die Berechnung der Grenzwertrate pr |
| 610 | zeitlicher Verlauf 610 der Abweichung der Veränderungsrate dx/dt des Ist-Werts x der Regelgröße von dem Soll-Wert für die Berechnung der Grenzwertrate nr |

| 700 | zeitlicher Verlauf des gewünschten Werts y der Stellgröße |

| 800 | zeitlicher Verlauf des Werts yRL der Stellgröße |

| 900 | zeitlicher Verlauf der Grenzwertrate pr |
| 910 | zeitlicher Verlauf der Grenzwertrate nr |

| 1000 | zeitlicher Verlauf des normierten Werts yp |
| 1010 | zeitlicher Verlauf des normierten Werts yn |

| 1100 | Verfahren |
| 1110 | Vorgeben des Soll-Werts w |
| 1120 | Bestimmen des Ist-Werts x und der Veränderungsrate dx/dt des Ist-Werts x |
| 1130 | Bestimmen der gewünschten Veränderung y |
| 1140 | Übermitteln der gewünschten Veränderung y |
| 1150 | Ändern des Ist-Werts yRL |
| 1160 | Ausgabe des Ist-Werts yRL |

zitierte Literatur

zitierte Patentliteratur

WO 2008/064740 A1
WO 2015/153105 A1

**Patentansprüche**

1. Verfahren (1100) zum Regeln einer Regelstrecke (110; 200) mit einem fluidischen Antrieb;

    1.1 wobei der fluidische Antrieb der Regelstrecke (110; 200) zum Steuern einer Regelgröße geeignet ist;
    1.2 wobei die Regelstrecke (110; 200) zum Steuern der Regelgröße mit einer Stellgröße beaufschlagt wird;

    wobei das Verfahren folgende Schritte umfasst:

    1.3 Vorgeben (1110) eines Soll-Werts (w) für die Regelgröße;
    1.4 Bestimmen (1120) eines Ist-Werts (x) und einer Veränderungsrate (dx/dt) des Ist-Werts (x) der Regelgröße;
    1.5 Bestimmen (1130) einer gewünschten Veränderung (y) eines Werts (yRL) der Stellgröße anhand des vorgegebenen Soll-Werts (w) der Regelgröße und des bestimmten Ist-Werts (x) der Regelgröße;
    1.6 Leiten (1140) der gewünschten Veränderung (y) des Werts (yRL) der Stellgröße an einen Ratenbegrenzer (170);
    1.7 Erzeugen (1150, 1160) eines neuen Werts (yRL) der Stellgröße mithilfe des Ratenbegrenzers (170) und der gewünschten Veränderung (y) des Werts (yRL) der Stellgröße;
    1.7.1 wobei ein Soll-Wert für die Veränderungsrate (dx/dt) des Ist-Werts (x) der Regelgröße vorgegeben wird, der positiv ist;
    1.7.2 wobei eine Grenzwertrate (pr) anhand der Abweichung der Veränderungsrate (dx/dt) des Ist-Werts (x) der Regelgröße von dem Soll-Wert derart bestimmt wird,
    1.7.2.1 dass der Grenzwertrate (pr) ein größerer Wert zugewiesen wird, wenn die Veränderungsrate (dx/dt) des Ist-Werts (x) der Regelgröße kleiner als der Soll-Wert ist, und ein kleinerer Wert, wenn die Veränderungsrate (dx/dt) des Ist-Werts (x) der Regelgröße größer als der Soll-Wert ist;
    1.7.3 wobei der Ratenbegrenzer (170), falls die gewünschte Veränderung (y) des Werts (yRL) der Stellgröße einer gewünschten Stellgrößenveränderungsrate entspricht, die größer als die Grenzwertrate (pr) ist, den neuen Wert (yRL) der Stellgröße mit einer Stellgrößenveränderungsrate erzeugt, die gleich der Grenzwertrate (pr) ist.

2. Verfahren (1100) nach dem vorhergehenden Anspruch,
   **dadurch gekennzeichnet,**

    2.1 dass ein positiver Schwellwert vorgegeben wird; und
    2.2 dass der Grenzwertrate (pr) ein negativer Wert zugewiesen wird, wenn die Veränderungsrate (dx/dt) des Ist-Werts (x) der Regelgröße größer als der Soll-Wert zuzüglich des Schwellwerts ist.

3. Verfahren (1100) nach einem der vorhergehenden Ansprüche,
   **dadurch gekennzeichnet,**

    3.1 dass ein positiver Mindestwert vorgegeben wird; und
    3.2 dass der Grenzwertrate (pr) nur dann ein neuer Wert zugewiesen wird, falls die Abweichung der Veränderungsrate (dx/dt) des Ist-Werts (x) der Regelgröße von dem Soll-Wert betragsmäßig größer ist als der positive Mindestwert.

4. Verfahren (1100) nach einem der vorhergehenden Ansprüche,
   **dadurch gekennzeichnet,**
   **dass** die Grenzwertrate (pr) anhand der Abweichung der Veränderungsrate (dx/dt) des Ist-Werts (x) der Regelgröße von dem Soll-Wert mithilfe eines PD-Gliedes (191) bestimmt wird.

**5.** Verfahren (1100) nach einem der vorhergehenden Ansprüche, **dadurch gekennzeichnet,**

5.1 dass eine untere Schranke (prmin) und eine obere Schranke (prmax) vorgegeben werden; und
5.2 dass die Grenzwertrate (pr) so bestimmt wird, dass ihr Wert größer als die oder gleich der unteren Schranke (prmin) und kleiner als die oder gleich der oberen Schranke (prmax) ist.

**6.** Verfahren (1100) nach einem der vorhergehenden Ansprüche, **dadurch gekennzeichnet,**

6.1 dass ein zeitlicher Mittelwert des Ist-Werts (x) der Regelgröße bestimmt wird; und
6.2 dass die Veränderungsrate (dx/dt) des Ist-Werts (x) der Regelgröße mithilfe des zeitlichen Mittelwerts des Ist-Werts (x) der Regelgröße bestimmt wird.

**7.** Verfahren (1100) nach einem der vorhergehenden Ansprüche, **dadurch gekennzeichnet,**

7.1 dass ein weiterer Soll-Wert für die Veränderungsrate (dx/dt) des Ist-Werts der Regelgrö-βe vorgegeben wird, der negativ ist;
7.2 dass eine weitere Grenzwertrate (nr) anhand der Abweichung der Veränderungsrate (dx/dt) des Ist-Werts (x) der Regelgröße von dem weiteren Soll-Wert derart bestimmt wird,
7.2.1 dass der weiteren Grenzwertrate (nr) ein größerer Wert zugewiesen wird, wenn die Veränderungsrate (dx/dt) des Ist-Werts (x) der Regelgröße kleiner als der weitere Soll-Wert ist, und ein kleinerer Wert, wenn die Veränderungsrate (dx/dt) des Ist-Werts (x) der Regelgröße größer als der weitere Soll-Wert ist;
7.3 wobei der Ratenbegrenzer (170), falls die gewünschte Veränderung (y) des Werts (yRL) der Stellgröße einer gewünschten Stellgrößenveränderungsrate entspricht, die kleiner als die weitere Grenzwertrate (nr) ist, den neuen Wert (yRL) der Stellgröße mit einer Stellgrößenveränderungsrate erzeugt, die gleich der weiteren Grenzwertrate (nr) ist.

**8.** Verfahren (1100) zum Regeln einer Regelstrecke (110; 200) mit einem fluidischen Antrieb;

8.1 wobei der fluidische Antrieb der Regelstrecke (110; 200) zum Steuern einer Regelgröße geeignet ist;
8.2 wobei die Regelstrecke (110; 200) zum Steuern der Regelgröße mit einer Stellgröße beaufschlagt wird;

wobei das Verfahren folgende Schritte umfasst:

8.3 Vorgeben (1110) eines Soll-Werts (w) für die Regelgröße;
8.4 Bestimmen (1120) eines Ist-Werts (x) und einer Veränderungsrate (dx/dt) des Ist-Werts (x) der Regelgröße;
8.5 Bestimmen (1130) einer gewünschten Veränderung (y) eines Werts (yRL) der Stellgröße anhand des vorgegebenen Soll-Werts (w) der Regelgröße und des bestimmten Ist-Werts (x) der Regelgröße;
8.6 Leiten (1140) der gewünschten Veränderung (y) des Werts (yRL) der Stellgröße an einen Ratenbegrenzer (170);
8.7 Erzeugen (1150, 1160) eines neuen Werts (yRL) der Stellgröße mithilfe des Ratenbegrenzers (170) und der gewünschten Veränderung (y) des Werts (yRL) der Stellgröße;
8.7.1 wobei ein Soll-Wert für die Veränderungsrate (dx/dt) des Ist-Werts der Regelgröße vorgegeben wird, der negativ ist;
8.7.2 wobei eine Grenzwertrate (nr) anhand der Abweichung der Veränderungsrate (dx/dt) des Ist-Werts (x) der Regelgröße von dem Soll-Wert derart bestimmt wird,
8.7.2.1 dass der Grenzwertrate (nr) ein größerer Wert zugewiesen wird, wenn die Veränderungsrate (dx/dt) des Ist-Werts (x) der Regelgröße kleiner als der Soll-Wert ist, und ein kleinerer Wert, wenn die Veränderungsrate (dx/dt) des Ist-Werts (x) der Regelgröße größer als der Soll-Wert ist;
8.7.3 wobei der Ratenbegrenzer (170), falls die gewünschte Veränderung (y) des Werts (yRL) der Stellgröße einer gewünschten Stellgrößenveränderungsrate entspricht, die kleiner als die Grenzwertrate (nr) ist, den neuen Wert (yRL) der Stellgröße mit einer Stellgrößenveränderungsrate erzeugt, die gleich der Grenzwertrate (nr) ist.

**9.** Stellungsregler mit einem Strom-Druck-Wandler zur Regelung des Drucks eines Fluids in einem fluidischen Antrieb und/oder zur Regelung der Position eines verstellbaren Glieds mithilfe des fluidischen Antriebs und mit Mitteln (110, 120, 130, 140, 150, 160, 170, 180, 181, 190; 210), die geeignet sind, die Schritte eines Verfahrens nach einem der vorhergehenden Verfahrensansprüche auszuführen.

10. Stellungsregler nach dem unmittelbar vorhergehenden Anspruch,
**gekennzeichnet durch**,
einen Druck-Druck-Wandler, mithilfe dessen der Druck des Fluids in dem Antrieb verstärkt wird.

11. Stellventil zur Regelung einer Prozessfluidströmung einer prozesstechnischen Anlage mit einem Stellungsregler nach einem der beiden unmittelbar vorhergehenden Ansprüche.

12. Computerprogramm, umfassend Befehle, die bewirken, dass ein Stellungsregler nach Anspruch 9 oder 10 oder ein Stellventil nach Anspruch 11 die Verfahrensschritte nach einem der Ansprüche 1 bis 8 ausführt.

13. Computerlesbares Medium, auf dem das Computerprogramm nach dem unmittelbar vorhergehenden Anspruch gespeichert ist.

**Claims**

1. Method (1100) for regulating a regulated system (110; 200) with a fluidic drive

    1.1 wherein the fluidic drive of the regulated system (110; 200) is suitable for regulating a regulated variable;
    1.2 wherein a control variable is applied to the regulated system (110; 200) to control the regulated variable;

    wherein the method comprises the following steps:

    1.3 specifying (1110) a setpoint value (w) for the regulated variable;
    1.4 determining (1120) an actual value (x) and a rate of change (dx/dt) of the actual value (x) of the regulated variable;
    1.5 determining (1130) a desired change (y) in a value (yRL) of the control variable on the basis of the predetermined setpoint value (w) of the regulated variable and the determined actual value (x) of the regulated variable;
    1.6 forwarding (1140) the desired change (y) in the value (yRL) of the control variable to a rate limiter (170);
    1.7 generating (1150, 1160) a new value (yRL) of the control variable with the aid of the rate limiter (170) and the desired change (y) in the value (yRL) of the control variable;
    1.7.1 wherein a setpoint value for the rate of change (dx/dt) of the actual value (x) of the regulated variable is predetermined, which is positive;
    1.7.2 wherein a limit value rate (pr) is determined on the basis of the deviation of the rate of change (dx/dt) of the actual value (x) of the regulated variable from the setpoint value in such a way
    1.7.2.1 that the limit value rate (pr) is assigned a larger value if the rate of change (dx/dt) of the actual value (x) of the regulated variable is smaller than the setpoint value, and a smaller value if the rate of change (dx/dt) of the actual value (x) of the regulated variable is larger than the setpoint value;
    1.7.3 wherein the rate limiter (170), if the desired change (y) in the value (yRL) of the control variable corresponds to a desired rate of change of the control variable which is greater than the limit value rate (pr), generates the new value (yRL) of the control variable at a rate of change of the control variable which is equal to the limit value rate (pr).

2. Method (1100) according to the preceding claim,
**characterized in**

    2.1 that a positive threshold value is predetermined; and
    2.2 that a negative value is assigned to the limit value rate (pr) if the rate of change (dx/dt) of the actual value (x) of the regulated variable is greater than the setpoint value plus the threshold value.

3. Method (1100) according to one of the preceding claims,
**characterized in**

    3.1 that a positive minimum value is specified; and
    3.2 that a new value is only assigned to the limit value rate (pr) if the deviation of the rate of change (dx/dt) of the actual value (x) of the regulated variable from the setpoint value is greater in amount than the positive minimum value.

**4.** Method (1100) according to one of the preceding claims, **characterized in**

**that** the limit value rate (pr) is determined on the basis of the deviation of the rate of change (dx/dt) of the actual value (x) of the regulated variable from the setpoint value with the aid of a PD element (191).

**5.** Method (1100) according to one of the preceding claims, **characterized in**

5.1 that a lower limit (prmin) and an upper limit (prmax) are predetermined; and
5.2 that the limit value rate (pr) is determined such that its value is greater than or equal to the lower limit (prmin) and less than or equal to the upper limit (prmax).

**6.** Method (1100) according to one of the preceding claims, **characterized in**

6.1 that a time average of the actual value (x) of the regulated variable is determined; and
6.2 that the rate of change (dx/dt) of the actual value (x) of the regulated variable is determined using the time average of the actual value (x) of the regulated variable.

**7.** Method (1100) according to one of the preceding claims, **characterized in**

7.1 that a further setpoint value for the rate of change (dx/dt) of the actual value of the regulated variable is specified, which is negative;
7.2 that a further limit value rate (nr) is determined on the basis of the deviation of the rate of change (dx/dt) of the actual value (x) of the regulated variable from the further setpoint value in such a way
7.2.1 that the further limit value rate (nr) is assigned a larger value if the rate of change (dx/dt) of the actual value (x) of the regulated variable is smaller than the further setpoint value, and a smaller value if the rate of change (dx/dt) of the actual value (x) of the regulated variable is larger than the further setpoint value;
7.3 wherein the rate limiter (170), if the desired change (y) in the value (yRL) of the control variable corresponds to a desired rate of change of the control variable which is less than the further limit value rate (nr), generates the new value (yRL) of the control variable at a rate of change of the control variable which is equal to the further limit value rate (nr).

**8.** Method (1100) for regulating a regulated system (110; 200) with a fluidic drive;

8.1 wherein the fluidic drive of the regulated system (110; 200) is suitable for controlling a regulated variable;
8.2 wherein a control variable is applied to the regulated system (110; 200) to control the regulated variable;

wherein the method comprises the following steps:

8.3 predetermining (1110) a setpoint value (w) for the regulated variable;
8.4 determining (1120) an actual value (x) and a rate of change (dx/dt) of the actual value (x) of the regulated variable;
8.5 determining (1130) a desired change (y) in a value (yRL) of the control variable on the basis of the predetermined setpoint value (w) of the regulated variable and the determined actual value (x) of the regulated variable;
8.6 forwarding (1140) the desired change (y) in the value (yRL) of the control variable to a rate limiter (170);
8.7 generating (1150, 1160) a new value (yRL) of the control variable with the aid of the rate limiter (170) and the desired change (y) in the value (yRL) of the control variable;
8.7.1 wherein a setpoint value for the rate of change (dx/dt) of the actual value of the regulated variable is specified, which is negative;
8.7.2 wherein a limit value rate (nr) is determined on the basis of the deviation of the rate of change (dx/dt) of the actual value (x) of the regulated variable from the setpoint value in such a way
8.7.2.1 that the limit value rate (nr) is assigned a larger value if the rate of change (dx/dt) of the actual value (x) of the regulated variable is smaller than the setpoint value, and a smaller value if the rate of change (dx/dt) of the actual value (x) of the regulated variable is larger than the setpoint value;

8.7.3 wherein the rate limiter (170), if the desired change (y) in the value (yRL) of the control variable corresponds to a desired rate of change of the control variable which is less than the limit value rate (nr), generates the new value (yRL) of the control variable at a rate of change of the control variable which is equal to the limit value rate (nr).

**9.** Positioner with a current-pressure transducer for controlling the pressure of a fluid in a fluidic drive and/or for controlling the position of an adjustable member with the aid of the fluidic drive and with means (110, 120, 130, 140, 150, 160, 170, 180, 181, 190; 210) which are suitable for carrying out the steps of a method according to one of the preceding method claims.

**10.** Positioner according to the immediately preceding claim,
**characterized by**
a pressure-pressure transducer by means of which the pressure of the fluid in the actuator is amplified.

**11.** Control valve for controlling a process fluid flow of a process plant with a positioner according to one of the two immediately preceding claims.

**12.** Computer program comprising instructions which cause a positioner according to claim 9 or 10 or a control valve according to claim 11 to perform the process steps according to any one of claims 1 to 8.

**13.** Computer-readable medium on which the computer program according to the immediately preceding claim is stored.


**Revendications**

**1.** Procédé (1100) de régulation d'une boucle à régler (110 ; 200) avec un entraînement fluidique ;

1.1 dans lequel l'entraînement fluidique de la boucle à régler (110 ; 200) est adapté à la commande d'une variable à réglée ;
1.2 dans lequel la boucle à régler (110 ; 200) est alimentée par une variable réglante pour commander la variable réglée ;

dans lequel le procédé comprend les étapes suivantes :

1.3 définir (1110) une valeur de consigne (w) pour la variable réglée ;
1.4 déterminer (1120) une valeur réelle (x) et un taux de variation (dx/dt) de la valeur réelle (x) de la variable réglée ;
1.5 déterminer (1130) une variation souhaitée (y) d'une valeur (yRL) de la variable réglante à l'aide de la valeur de consigne prédéterminée (w) de la variable réglée et de la valeur réelle déterminée (x) de la variable réglée ;
1.6 diriger (1140) la variation souhaitée (y) de la valeur (yRL) de la variable réglante vers un limiteur de taux (170) ;
1.7 générer (1150, 1160) une nouvelle valeur (yRL) de la variable réglante à l'aide du limiteur de taux (170) et de la variation souhaitée (y) de la valeur (yRL) de la variable réglante ;
1.7.1 dans lequel une valeur de consigne pour le taux de variation (dx/dt) de la valeur réelle (x) de la variable réglée est prédéfinie, laquelle est positive ;
1.7.2 dans lequel un taux de valeur limite (pr) est déterminé à l'aide de l'écart du taux de variation (dx/dt) de la valeur réelle (x) de la variable réglée par rapport à la valeur de consigne de telle sorte,
1.7.2.1 que le taux de valeur limite (pr) se voit attribuer une valeur plus grande lorsque le taux de variation (dx/dt) de la valeur réelle (x) de la variable réglée est inférieur à la valeur de consigne, et une valeur plus petite lorsque le taux de variation (dx/dt) de la valeur réelle (x) de la variable réglée est supérieur à la valeur de consigne ;
1.7.3 dans lequel, si la variation souhaitée (y) de la valeur (yRL) de la variable réglante correspond à un taux de variation souhaité de la variable réglante supérieur au taux limite (pr), le limiteur de taux (170) produit la nouvelle valeur (yRL) de la variable réglante à un taux de variation de la variable réglante égal au taux de valeur limite (pr).

**2.** Procédé (1100) selon la revendication précédente,
**caractérisé en ce**

2.1 qu'une valeur de seuil positive est définie ; et

2.2 qu'une valeur négative est attribuée au taux de valeur limite (pr) lorsque le taux de variation (dx/dt) de la valeur réelle (x) de la variable réglée est supérieur à la valeur de consigne augmentée de la valeur de seuil.

3. Procédé (1100) selon l'une quelconque des revendications précédentes,
   **caractérisé en ce**

   3.1 qu'une valeur minimale positive est spécifiée ; et
   3.2 qu'une nouvelle valeur n'est attribuée au taux de valeur limite (pr) que si l'écart entre le taux de variation (dx/dt) de la valeur réelle (x) de la variable réglée et la valeur de consigne est supérieur en valeur absolue à la valeur minimale positive.

4. Procédé (1100) selon l'une quelconque des revendications précédentes,
   **caractérisé en ce**
   **que** le taux de valeur limite (pr) est déterminé à partir de l'écart du taux de variation (dx/dt) de la valeur réelle (x) de la variable réglée par rapport à la valeur de consigne, à l'aide d'un élément PD (191).

5. Procédé (1100) selon l'une quelconque des revendications précédentes,
   **caractérisé en ce**

   5.1 qu'une limite inférieure (prmin) et une limite supérieure (prmax) sont prédéfinies ; et en ce
   5.2 que le taux de valeur limite (pr) est déterminé de manière à ce que sa valeur soit supérieure ou égale à la limite inférieure (prmin) et inférieure ou égale à la limite supérieure (prmax).

6. Procédé (1100) selon l'une quelconque des revendications précédentes,
   **caractérisé en ce**

   6.1 qu'une valeur moyenne dans le temps de la valeur réelle (x) de la variable réglée est déterminée ; et en ce
   6.2 que le taux de variation (dx/dt) de la valeur réelle (x) de la variable réglée est déterminé à l'aide de la valeur moyenne dans le temps de la valeur réelle (x) de la variable réglée.

7. Procédé (1100) selon l'une des revendications précédentes,
   **caractérisé en ce**

   7.1 qu'une autre valeur de consigne pour le taux de variation (dx/dt) de la valeur réelle de la variable réglée est prédéfinie, laquelle est négative ;
   7.2 qu'un autre taux de valeur limite (nr) est déterminé de cette manière à l'aide de l'écart entre le taux de variation (dx/dt) de la valeur réelle (x) de la variable réglée et l'autre valeur de consigne,
   7.2.1 que l'on attribue à l'autre taux de valeur limite (nr) une valeur plus grande lorsque le taux de variation (dx/dt) de la valeur réelle (x) de la variable réglée est inférieur à l'autre valeur de consigne, et une valeur plus petite lorsque le taux de variation (dx/dt) de la valeur réelle (x) de la variable réglée est supérieur à l'autre valeur de consigne ;
   7.3 dans lequel, si la variation souhaitée (y) de la valeur (yRL) de la variable réglante correspond à un taux de variation souhaité de la variable réglante qui est inférieur à l'autre taux de valeur limite (nr), le limiteur de taux (170) produit la nouvelle valeur (yRL) de la variable réglante avec un taux de variation de la variable réglante qui est égal à l'autre taux de valeur limite (nr).

8. Procédé (1100) de régulation d'une boucle à régler (110 ; 200) avec un entraînement fluidique ;

   8.1 dans lequel l'entraînement fluidique de la boucle à régler (110 ; 200) est adapté pour commander une variable réglée ;
   8.2 dans lequel la boucle à régler (110 ; 200) est alimentée par une variable réglante pour commander la variable réglée ;

   dans lequel le procédé comprend les étapes suivantes :

   8.3 définir (1110) une valeur de consigne (w) pour la variable réglée ;
   8.4 déterminer (1120) une valeur réelle (x) et un taux de variation (dx/dt) de la valeur réelle (x) de la variable réglée ;

8.5 déterminer (1130) une variation souhaitée (y) d'une valeur (yRL) de la variable réglante à l'aide de la valeur de consigne prédéterminée (w) de la variable réglée et de la valeur réelle déterminée (x) de la variable réglée ;

8.6 diriger (1140) la variation souhaitée (y) de la valeur (yRL) de la variable réglante vers un limiteur de taux (170) ;

8.7 générer (1150, 1160) une nouvelle valeur (yRL) de la variable réglante à l'aide du limiteur de taux (170) et de la variation souhaitée (y) de la valeur (yRL) de la variable réglante ;

8.7.1 dans lequel une valeur de consigne pour le taux de variation (dx/dt) de la valeur réelle de la variable réglée est prédéfinie, laquelle est négative ;

8.7.2 dans lequel un taux de valeur limite (nr) est déterminé à l'aide de l'écart du taux de variation (dx/dt) de la valeur réelle (x) de la variable réglée par rapport à la valeur de consigne de telle sorte

8.7.2.1 que le taux de valeur limite (nr) se voit attribuer une valeur plus grande lorsque le taux de variation (dx/dt) de la valeur réelle (x) de la variable réglée est inférieur à la valeur de consigne, et une valeur plus petite lorsque le taux de variation (dx/dt) de la valeur réelle (x) de la variable réglée est supérieur à la valeur de consigne ;

8.7.3 dans lequel, si la variation souhaitée (y) de la valeur (yRL) de la variable réglante correspond à un taux de variation souhaité de la variable réglante qui est inférieur au taux limite (nr), le limiteur de taux (170) produit la nouvelle valeur (yRL) de la variable réglante avec un taux de variation de la variable réglante qui est égal au taux limite (nr).

9. Positionneur comprenant un convertisseur courant-pression pour régler la pression d'un fluide dans un entraînement fluidique et/ou pour régler la position d'un élément réglable à l'aide de l'entraînement fluidique et comprenant des moyens (110, 120, 130, 140, 150, 160, 170, 180, 181, 190 ; 210) adaptés pour exécuter les étapes d'un procédé selon l'une des revendications de procédé précédentes.

10. Positionneur selon la revendication immédiatement précédente,
**caractérisé par**
un convertisseur courant-pression au moyen duquel la pression du fluide dans l'entraînement est amplifiée.

11. Soupape de positionnement pour la régulation d'un écoulement de fluide de processus d'une installation de processus avec un positionneur selon l'une des deux revendications immédiatement précédentes.

12. Programme d'ordinateur comprenant des instructions pour faire en sorte qu'un positionneur selon la revendication 9 ou 10 ou une soupape de positionnement selon la revendication 11 exécute les étapes du procédé selon l'une quelconque des revendications 1 à 8.

13. Support lisible par ordinateur sur lequel est stocké le programme d'ordinateur selon la revendication immédiatement précédente.

Fig. 1

Fig. 2

Fig. 3

Fig. 4

Fig. 5

Fig. 6

Fig. 7

Fig. 8

Fig. 9

Fig. 10

1100

```
        ┌─────────┐
        │  Start  │
        └─────────┘
             │
             ▼
        ╱─────────╱
       ╱  1110   ╱
      ╱─────────╱
             │
             ▼
        ┌─────────┐
        │  1120   │
        └─────────┘
             │
             ▼
        ┌─────────┐
        │  1130   │
        └─────────┘
             │
             ▼
        ┌─────────┐
        │  1140   │
        └─────────┘
             │
             ▼
        ┌─────────┐
        │  1150   │
        └─────────┘
             │
             ▼
        ╱─────────╱
       ╱  1160   ╱
      ╱─────────╱
             │
             ▼
        ┌─────────┐
        │  Stopp  │
        └─────────┘
```

Fig. 11

**IN DER BESCHREIBUNG AUFGEFÜHRTE DOKUMENTE**

**In der Beschreibung aufgeführte Patentdokumente**

- DE 102020002868
- WO 2008064740 A1
- WO 2015153105 A1